# EUROPEAN PATENT SPECIFICATION

(11) **EP 4 106 057 B1**
(45) Date of publication and mention of the grant of the patent: **04.06.2025**
(21) Application number: 21923587.6
(22) Date of filing: 04.02.2021
(51) Int. Cl.: H01M 4/70, H01M 10/0585, H01M 10/0587, H01M 10/052, H01M 4/02, H01M 4/04, H01M 4/13, H01M 50/531, H01M 10/42

(54) **ELECTRODE ASSEMBLY AND MANUFACTURING METHOD AND MANUFACTURING SYSTEM THEREFOR, BATTERY CELL AND BATTERY**
ELEKTRODENANORDNUNG UND HERSTELLUNGSVERFAHREN SOWIE HERSTELLUNGSSYSTEM DAFÜR, BATTERIEZELLE UND BATTERIE
ENSEMBLE ÉLECTRODE, PROCÉDÉ DE FABRICATION ET SYSTÈME DE FABRICATION CORRESPONDANTS, CELLULE DE BATTERIE ET BATTERIE

(43) Date of publication of application: 21.12.2022
(60) Divisional application: 25165602.1
(73) Proprietor: Contemporary Amperex Technology (Hong Kong) Limited, Central, Central And Western District (HK)
(72) Inventor: XU, Hu, Ningde City Fujian 352100 (CN)
(74) Representative: Ziebig Hengelhaupt Intellectual Property Attorneys Patentanwaltskanzlei PartGmbB
(86) International application number: PCT/CN2021/075165
(87) International publication number: WO 2022/165689

(56) References cited:
- EP-A1- 3 252 862
- EP-A1- 3 416 215
- CN-A- 108 258 193
- CN-A- 108 258 193
- CN-A- 109 088 091
- CN-A- 110 010 902
- CN-U- 205 194 796
- JP-A- 2010 205 429
- US-A1- 2020 313 171

## Description

### TECHNICAL FIELD

This application relates to the technical field of batteries, and more specifically, to an electrode assembly, a method and system for manufacturing same, a battery cell, and a battery.

### BACKGROUND

A rechargeable battery, also known as a secondary battery, is a battery that is reusable after the active material is activated by charging the battery that is discharged. Rechargeable batteries are widely used in electronic devices such as a mobile phone, a notebook computer, an electric power cart, an electric vehicle, an electric airplane, an electric ship, an electric toy car, an electric toy ship, an electric toy airplane, and a power tool.

In the development of battery technology, safety is a non-negligible issue in addition to improvement of battery performance. If the safety of the battery is not guaranteed, the battery is not suitable for use. Therefore, how to enhance the safety of the battery is an urgent technical issue in the battery technology.

US2020313171 and EP3416215 disclose battery electrode assemblies of the related art.

### SUMMARY

This application provides an electrode assembly, a method and system for manufacturing same, a battery cell, and a battery to enhance battery safety. According to a first aspect, an embodiment of this application provides an electrode assembly. The electrode assembly includes a positive electrode plate and a negative electrode plate that are stacked. A positive active material layer of the positive electrode plate is disposed opposite to a negative active material layer of the negative electrode plate. The negative active material layer includes a negative electrode body portion and a negative electrode edge portion connected to the negative electrode body portion, the negative electrode edge portion is located at an end of the negative active material layer along a first direction, the first direction is perpendicular to a stacking direction of the positive electrode plate and the negative electrode plate, and a thickness of the negative electrode edge portion is less than a thickness of the negative electrode body portion, and, in the stacking direction, at least a part of the negative electrode edge portion overlaps the positive active material layer, and the negative active material layer is configured in such a way that a capacity per unit area of the negative electrode edge portion is greater than or equal to a capacity per unit area of the negative electrode body portion wherein in the first direction (Y), a ratio of a dimension of the negative electrode edge portion to a dimension of the negative active material layer is 0.01 to 0.2; and the positive active material layer includes a positive electrode body portion and a positive electrode edge portion connected to the positive electrode body portion, the positive electrode edge portion is located at an end of the positive active material layer along a first direction, a thickness of the positive electrode edge portion is less than a thickness of the positive electrode body portion, and, in the stacking direction, at least a part of the positive electrode edge portion overlaps the negative electrode edge portion, and the positive active material layer is configured in such a way that a capacity per unit area of the positive electrode edge portion is less than a capacity per unit area of the positive electrode body portion, wherein in the first direction (Y), a ratio of a dimension of the positive electrode edge portion to a dimension of the positive active material layer is 0.01 to 0.2.

In the solution above, the negative electrode body portion is not prone to lithium plating when the capacity per unit area of the negative electrode body portion meets a given requirement, where the given requirement is that the capacity per unit area of the negative electrode body portion reaches a first preset value. If the negative active material layer is configured in such a way that the capacity per unit area of the negative electrode edge portion is greater than or equal to the capacity per unit area of the negative electrode body portion, then the capacity per unit area of the negative electrode edge portion is greater than or equal to the first preset value. This is equivalent to increasing the capacity per unit area of the negative electrode edge portion. **In** this way, even if the thickness of the negative electrode edge portion is less than the thickness of the negative electrode body portion, the negative electrode edge portion can still accept the lithium ions deintercalated from the positive active material layer. **In** this way, the negative electrode edge portion is not prone to lithium plating.

A part that is of the negative electrode body portion and that overlaps the positive electrode body portion is not prone to lithium plating when the capacity per unit area of the positive electrode body portion meets a given requirement, where the given requirement is that the capacity per unit area of the positive electrode body portion reaches a second preset value. If the positive active material layer is configured in such a way that the capacity per unit area of the positive electrode edge portion is less than the capacity per unit area of the positive electrode body portion, then the capacity per unit area of the positive electrode edge portion is less than the second preset value. This is equivalent to decreasing the capacity per unit area of the positive electrode edge portion. In this way, even if the thickness of the negative electrode edge portion is less than the thickness of the negative electrode body portion, the negative electrode edge portion can still accept the lithium ions deintercalated from a part that is of the positive electrode edge portion and that overlaps the negative electrode edge portion. Therefore, the negative electrode edge portion is not prone to lithium plating.

In some embodiments, a weight ratio of the active material of the negative electrode edge portion to the negative electrode edge portion is greater than a weight ratio of the active material of the negative electrode body portion to the negative electrode body portion. By increasing the active material in the negative electrode edge portion, the weight ratio of the active material in the negative electrode edge portion is increased, and the capacity per unit area of the negative electrode edge portion is increased so that the capacity per unit area of the negative electrode edge portion is greater than or equal to the capacity per unit area of the negative electrode body portion.

In some embodiments, a gram capacity of the active material of the negative electrode edge portion is greater than a gram capacity of the active material of the negative electrode body portion. By increasing the gram capacity of the active material in the negative electrode edge portion, the capacity per unit area of the negative electrode edge portion can be increased so that the capacity per unit area of the negative electrode edge portion is greater than or equal to the capacity per unit area of the negative electrode body portion.

In some embodiments, the negative electrode edge portion includes a first negative coating and a second negative coating that are stacked along the stacking direction; and A weight ratio of the active material of the second negative coating to the second negative coating is greater than a weight ratio of the active material of the first negative coating to the first negative coating. By increasing the active material in the second negative coating, the weight ratio of the active material in the second negative coating is increased, and in turn, the capacity per unit area of the negative electrode edge portion is increased so that the capacity per unit area of the negative electrode edge portion is greater than or equal to the capacity per unit area of the negative electrode body portion. In other embodiments, a gram capacity of the active material of the second negative coating is greater than a gram capacity of the active material of the first negative coating. By increasing the gram capacity of the active material in the second negative coating, the capacity per unit area of the negative electrode edge portion is increased so that the capacity per unit area of the negative electrode edge portion is greater than or equal to the capacity per unit area of the negative electrode body portion.

In some embodiments, a particle diameter of the active material of the negative electrode edge portion is less than a particle diameter of the active material of the negative electrode body portion. During charging and discharging, lithium ions are diffused more easily in the negative electrode edge portion, and distributed more evenly in the negative electrode edge portion, and are not prone to concentrate locally at the negative electrode edge portion, thereby reducing risks of lithium plating.

In some embodiments, the negative electrode plate includes a negative current collector. The negative current collector includes a negative coating region and a negative tab. At least a part of the negative active material layer is coated on the negative coating region. The negative tab is connected to an end of the negative coating region along the first direction. The negative electrode edge portion is located on a side that is of the negative electrode body portion and that is close to the negative tab along the first direction.

In some embodiments, the thickness of the negative electrode edge portion gradually decreases along a direction that faces back from the negative electrode body portion and that is parallel to the first direction. In this way, stress can be diffused in a process of calendering the negative electrode plate, stress concentration can be reduced, and risks of breaking the negative current collector can be reduced.

**In** some embodiments, a weight ratio of the active material of the positive electrode edge portion to the positive electrode edge portion is less than a weight ratio of the active material of the positive electrode body portion to the positive electrode body portion. By decreasing the active material in the positive electrode edge portion, the weight ratio of the active material in the positive electrode edge portion is decreased, and the capacity per unit area of the positive electrode edge portion is decreased so that the capacity per unit area of the positive electrode edge portion is less than the capacity per unit area of the positive electrode body portion.

In some embodiments, a gram capacity of the active material of the positive electrode edge portion is less than a gram capacity of the active material of the positive electrode body portion. By decreasing the gram capacity of the active material in the positive electrode edge portion, the capacity per unit area of the positive electrode edge portion can be decreased so that the capacity per unit area of the positive electrode edge portion is less than the capacity per unit area of the positive electrode body portion.

In some embodiments, the positive electrode edge portion includes a first positive coating and a second positive coating that are stacked along the stacking direction. A weight ratio of the active material of the second positive coating to the second positive coating is less than a weight ratio of the active material of the first positive coating to the first positive coating. By decreasing the active material in the second positive coating, the weight ratio of the active material in the second positive coating is decreased, and in turn, the capacity per unit area of the positive electrode edge portion is decreased so that the capacity per unit area of the positive electrode edge portion is less than the capacity per unit area of the positive electrode body portion. **In** other embodiments, a gram capacity of the active material of the second positive coating is less than a gram capacity of the active material of the first positive coating. By decreasing the gram capacity of the active material in the second positive coating, the capacity per unit area of the positive electrode edge portion is decreased so that the capacity per unit area of the positive electrode edge portion is less than the capacity per unit area of the positive electrode body portion.

In some embodiments, a particle diameter of the active material of the positive electrode edge portion is greater than a particle diameter of the active material of the positive electrode body portion. During charging and discharging, a diffusion speed of lithium ions in the positive electrode edge portion is low, and the speed of deintercalating the lithium ions from the positive electrode edge portion is also lower, thereby reducing risks of concentrating the lithium ions at a part that is of the negative electrode edge portion and that overlaps the positive electrode edge portion. In this way, the negative active material layer is not prone to lithium plating.

In some embodiments, the positive electrode plate includes a positive current collector. The positive current collector includes a positive coating region and a positive tab. At least a part of the positive active material layer is coated on the positive coating region. The positive tab is connected to an end of the positive coating region along the first direction. The positive electrode edge portion is located on a side that is of the positive electrode body portion and that is close to the positive tab along the first direction.

In some embodiments, the thickness of the positive electrode edge portion gradually decreases along a direction that faces back from the positive electrode body portion and that is parallel to the first direction. In this way, stress can be diffused in a process of calendering the positive electrode plate, stress concentration can be reduced, and risks of breaking the positive current collector can be reduced.

According to a second aspect, an embodiment of this application provides a battery cell.

The battery cell includes a shell (20) and the electrode assembly according to any embodiment of the first aspect. The electrode assembly is accommodated in the shell (20).

According to a third aspect, an embodiment of this application provides a battery. The battery includes: a box and the battery cell according to any embodiment of the second aspect. The battery cell is accommodated in the box.

According to a fourth aspect, an embodiment of this application provides an electrical device. The electrical device includes the battery according to any embodiment of the third aspect. The battery is configured to provide electrical energy.

According to a fifth aspect, an embodiment of this application provides a method for manufacturing an electrode assembly. The method includes: providing a positive electrode plate; providing a negative electrode plate; and stacking the positive electrode plate and the negative electrode plate, so that a positive active material layer of the positive electrode plate is disposed opposite to a negative active material layer of the negative electrode plate. The negative active material layer includes a negative electrode body portion and a negative electrode edge portion connected to the negative electrode body portion, the negative electrode edge portion is located at an end of the negative active material layer along a first direction, the first direction is perpendicular to a stacking direction of the positive electrode plate and the negative electrode plate, and a thickness of the negative electrode edge portion is less than a thickness of the negative electrode body portion. In the stacking direction, at least a part of the negative electrode edge portion overlaps the positive active material layer, and the negative active material layer is configured in such a way that a capacity per unit area of the negative electrode edge portion is greater than or equal to a capacity per unit area of the negative electrode body portion; and/or, the positive active material layer includes a positive electrode body portion and a positive electrode edge portion connected to the positive electrode body portion, the positive electrode edge portion is located at an end of the positive active material layer along a first direction, a thickness of the positive electrode edge portion is less than a thickness of the positive electrode body portion, and, in the stacking direction, at least a part of the positive electrode edge portion overlaps the negative electrode edge portion, and the positive active material layer is configured in such a way that a capacity per unit area of the positive electrode edge portion is less than a capacity per unit area of the positive electrode body portion. According to a sixth aspect, an embodiment of this application provides a system for manufacturing an electrode assembly. The system includes: a first providing device, configured to provide a positive electrode plate; a second providing device, configured to provide a negative electrode plate; and an assembling device, configured to stack the positive electrode plate and the negative electrode plate, so that a positive active material layer of the positive electrode plate is disposed opposite to a negative active material layer of the negative electrode plate. The negative active material layer includes a negative electrode body portion and a negative electrode edge portion connected to the negative electrode body portion, the negative electrode edge portion is located at an end of the negative active material layer along a first direction, the first direction is perpendicular to a stacking direction of the positive electrode plate and the negative electrode plate, and a thickness of the negative electrode edge portion is less than a thickness of the negative electrode body portion. In the stacking direction, at least a part of the negative electrode edge portion overlaps the positive active material layer, and the negative active material layer is configured in such a way that a capacity per unit area of the negative electrode edge portion is greater than or equal to a capacity per unit area of the negative electrode body portion; and/or, the positive active material layer includes a positive electrode body portion and a positive electrode edge portion connected to the positive electrode body portion, the positive electrode edge portion is located at an end of the positive active material layer along a first direction, a thickness of the positive electrode edge portion is less than a thickness of the positive electrode body portion, and, in the stacking direction, at least a part of the positive electrode edge portion overlaps the negative electrode edge portion, and the positive active material layer is configured in such a way that a capacity per unit area of the positive electrode edge portion is less than a capacity per unit area of the positive electrode body portion.

### BRIEF DESCRIPTION OF DRAWINGS

To describe the technical solutions in the embodiments of this application more clearly, the following outlines the drawings used in the embodiments of this application. Evidently, the drawings outlined below are merely a part of embodiments of this application. A person of ordinary skill in the art may derive other drawings from the outlined drawings without making any creative efforts.
FIG. 1 is a schematic structural diagram of a vehicle according to some embodiments of this application;
FIG. 2 is a schematic exploded view of a battery according to some embodiments of this application;
FIG. 3 is a schematic structural diagram of a battery module shown in FIG. 2;
FIG. 4 is a schematic exploded view of a battery cell shown in FIG. 3;
FIG. 5 is a schematic structural diagram of an electrode assembly according to an embodiment of this application;
FIG. 6 is partial schematic sectional view of the electrode assembly shown in FIG. 5 and sectioned along an A-A line;
FIG. 7 is a schematic structural diagram of an electrode assembly according to another embodiment of this application;
FIG. 8 is a partial schematic sectional view of an electrode assembly according to an embodiment of this application;
FIG. 9 is a partial schematic sectional view of an electrode assembly according to another embodiment of this application;
FIG. 10 is a partial schematic sectional view of an electrode assembly according to still another embodiment of this application;
FIG. 11 is a partial schematic sectional view of an electrode assembly according to another embodiment of this application;
FIG. 12 is a partial schematic sectional view of an electrode assembly according to yet another embodiment of this application;
FIG. 13 is a partial schematic sectional view of an electrode assembly according to another embodiment of this application;
FIG. 14 is a flowchart of a method for manufacturing an electrode assembly according to some embodiments of this application; and
FIG. 15 is a schematic block diagram of a system for manufacturing an electrode assembly according to some embodiments of this application.

The drawings are not drawn to scale.

### DETAILED DESCRIPTION OF EMBODIMENTS

To make the objectives, technical solutions, and advantages of the embodiments of this application clearer, the following gives a clear description of the technical solutions in the embodiments of this application with reference to the drawings in the embodiments of this application. Evidently, the described embodiments are merely a part of but not all of the embodiments of this application. All other embodiments derived by a person of ordinary skill in the art based on the embodiments of this application without making any creative efforts fall within the protection scope of this application.

Unless otherwise defined, all technical and scientific terms used herein have the same meanings as usually understood by a person skilled in the technical field of this application. The terms used in the specification of this application are merely intended for describing specific embodiments but are not intended to limit this application. The terms "include" and "contain" and any variations thereof used in the specification, claims, and brief description of drawings of this application are intended as non-exclusive inclusion. The terms such as "first" and "second" used in the specification, claims, and brief description of drawings of this application are intended to distinguish different objects, but are not intended to describe a specific sequence or order of priority. Reference to "embodiment" in this application means that a specific feature, structure or characteristic described with reference to the embodiment may be included in at least one embodiment of this application. Reference to this term in different places in the specification does not necessarily represent the same embodiment, nor does it represent an independent or alternative embodiment in a mutually exclusive relationship with other embodiments.

In the description of this application, unless otherwise expressly specified and defined, the terms "mount", "concatenate", "connect", and "attach" are understood in a broad sense. For example, a "connection" may be a fixed connection, a detachable connection, or an integrated connection; or may be a direct connection or an indirect connection implemented through an intermediary; or may be internal communication between two components. A person of ordinary skill in the art understands the specific meanings of the terms in this application according to the context.

The term "and/or" in this application indicates merely a relation for describing the related objects, and represents three possible relationships. For example, "A and/or B" may represent the following three circumstances: A alone, both A and B, and B alone. In addition, the character "/" herein generally indicates an "or" relationship between the object preceding the character and the object following the character.

In embodiments of this application, the same reference numeral denotes the same component. For brevity, detailed descriptions of the same component are omitted in a different embodiment. Understandably, dimensions such as thickness, length, and width of various components in the embodiments of this application shown in the drawings, and dimensions such as overall thickness, length, and width of an integrated device are merely exemplary descriptions, but do not constitute any limitation on this application. "A plurality of" referred to in this application means two or more (including two).

In this application, a battery cell may include a lithium-ion secondary battery cell, a lithium-ion primary battery cell, a lithium-sulfur battery cell, a sodium-lithium-ion battery cell, a sodium-ion battery cell, a magnesium-ion battery cell, or the like. The embodiments of this application do not limit the type of the battery cell. The battery cell may be in a cylindrical shape, a flat shape, a cuboidal shape, or other shapes. The embodiments of this application do not limit the shape of the battery cell. Depending on the form of packaging, the battery cell is typically classed into three types: cylindrical battery cell, prismatic battery cell, and pouch-type battery cell. The embodiments of this application do not limit the form of the battery cell.

The battery mentioned in the embodiments of this application means a stand-alone physical module that includes one or more battery cells to provide a higher voltage and a higher capacity. For example, the battery mentioned in this application may include a battery module, a battery pack, or the like. A battery typically includes a box configured to package one or more battery cells. The box can prevent liquid or other foreign matters from affecting the charging or discharge of the battery cells.

A battery cell includes an electrode assembly and an electrolytic solution. The electrode assembly includes a positive electrode plate, a negative electrode plate, and a separator. The battery cell works primarily by relying on movement of metal ions between the positive electrode plate and the negative electrode plate. The positive electrode plate includes a positive current collector and a positive active material layer. The positive active material layer is coated on a surface of the positive current collector. A part that is of the positive current collector and that is not coated with the positive active material layer protrudes from a part that is of the positive current collector and that is coated with the positive active material layer. The part that is of the positive current collector and that is not coated with the positive active material layer serves as a positive tab. Using a lithium-ion battery as an example, the positive current collector may be made of aluminum, and a positive active material may be lithium cobalt oxide, lithium iron phosphate, ternary lithium, lithium manganese oxide, or the like. The negative electrode plate includes a negative current collector and a negative active material layer. The negative active material layer is coated on a surface of the negative current collector. A part that is of the negative current collector and that is not coated with the negative active material layer protrudes from a part that is of the negative current collector and that is coated with the negative active material layer. The part that is of the negative current collector and that is not coated with the negative active material layer serves as a negative tab. The negative current collector may be made of copper, and a negative active material may be carbon, silicon, or the like. In order to ensure passage of a large current without fusing off, the positive tab is plural in number, and the plurality of positive tabs are stacked together; the negative tab is plural in number, and the plurality of negative tabs are stacked together. The separator may be made of a material such as polypropylene (PP) or polyethylene (PE). In addition, the electrode assembly may be a jelly-roll structure or a stacked structure, without being limited herein.

In a process of manufacturing a negative electrode plate, a negative active slurry is made first by mixing a negative active material, a binder, a conductive agent, a solvent, and the like. Subsequently, the negative active slurry is coated on a negative current collector. A negative active material layer is formed after the negative active slurry is subjected to steps such as calendering and curing. However, due to fluidity and surface tension of the negative active slurry, a thin-layer region of a relatively small thickness is formed at the end of the negative active material layer after the negative active material layer is formed.

When a battery cell is charged by an external power supply, electrons e on a positive electrode run to a negative electrode through an external circuit. Lithium ions Li⁺ are deintercalated from active material particles in a positive active material layer and enter an electrolytic solution, and then pass through micropores in a separator, and move to the negative electrode to combine with the electrons that have already arrived. Subsequently, the lithium ions combined with the electrons enter active material particles in the negative active material layer. Due to a small thickness, the thin-layer region may be unable to accept all the lithium ions because the capacity is insufficient, resulting in risks of precipitating the lithium ions on a surface of the thin-layer region and forming lithium dendrites. Once the lithium dendrites are formed, the lithium dendrites may pierce the separator, lead to an internal short circuit of the battery cell, and result in thermal runaway.

In view of this, an embodiment of this application provides an electrode assembly. The electrode assembly includes a positive electrode plate and a negative electrode plate that are stacked. A positive active material layer of the positive electrode plate is disposed opposite to a negative active material layer of the negative electrode plate. The negative active material layer includes a negative electrode body portion and a negative electrode edge portion connected to the negative electrode body portion. The negative electrode edge portion is located at an end of the negative active material layer along a first direction. The first direction is perpendicular to a stacking direction of the positive electrode plate and the negative electrode plate. A thickness of the negative electrode edge portion is less than a thickness of the negative electrode body portion. In the stacking direction, at least a part of the negative electrode edge portion overlaps the positive active material layer, and the negative active material layer is configured in such a way that a capacity per unit area of the negative electrode edge portion is greater than or equal to a capacity per unit area of the negative electrode body portion; and/or, the positive active material layer includes a positive electrode body portion and a positive electrode edge portion connected to the positive electrode body portion, the positive electrode edge portion is located at an end of the positive active material layer along a first direction, a thickness of the positive electrode edge portion is less than a thickness of the positive electrode body portion, and, in the stacking direction, at least a part of the positive electrode edge portion overlaps the negative electrode edge portion, and the positive active material layer is configured in such a way that a capacity per unit area of the positive electrode edge portion is less than a capacity per unit area of the positive electrode body portion. The electrode assembly of such a structure can reduce risks of lithium plating and enhance battery safety.

The technical solutions described in this embodiment of this application are applicable to a battery and an electrical device that uses the battery.

The electrical device may be a vehicle, a mobile phone, a portable device, a notebook computer, a ship, a spacecraft, an electric toy, a power tool, or the like. The vehicle may be an oil-fueled vehicle, a natural gas vehicle, or a new energy vehicle. The new energy vehicle may be a battery electric vehicle, a hybrid electric vehicle, a range-extended electric vehicle, or the like. The spacecraft includes an airplane, a rocket, a space shuttle, a spaceship, and the like. The electric toy includes a fixed or mobile electric toy, such as a game console, an electric car toy, an electric ship toy, an electric airplane toy, and the like. The power tool includes an electrical metal cutting tool, an electrical grinding tool, an electrical assembling tool, and a power tool for use in railways. Examples of the power tool are an electrical drill, an electrical grinder, an electrical wrench, an electrical screwdriver, an electrical hammer, an electrical impact drill, a concrete vibrator, an electrical planer, and the like. Embodiments of this application do not particularly limit the electrical device.

For ease of description in the following embodiments, a vehicle is used as an example of the electrical device.

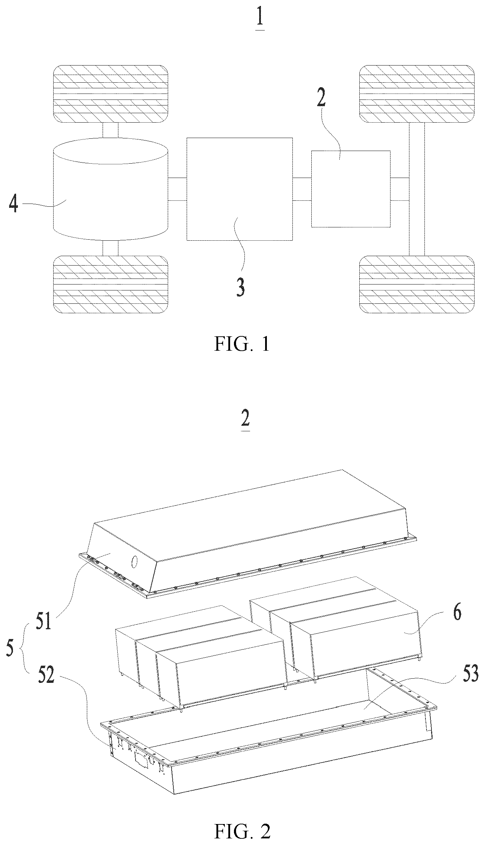

Referring to FIG. 1, FIG. 1 is a schematic structural diagram of a vehicle 1 according to some embodiments of this application. A battery 2 is disposed inside the vehicle 1. The battery 2 may be disposed at the bottom, front or rear of the vehicle 1. The battery 2 may be configured to supply power to the vehicle 1. For example, the battery 2 may serve as an operating power supply of the vehicle 1.

The vehicle 1 may further include a controller 3 and a motor 4. The controller 3 is configured to control the battery 2 to supply power to the motor 4, for example, to start or navigate the vehicle 1, or meet the operating power requirements of the vehicle in operation.

In some embodiments of this application, the battery 2 serves not only as an operating power supply of the vehicle 1, but may also serve as a drive power supply of the vehicle 1 to provide driving power for the vehicle 1 in place of or partially in place of oil or natural gas.

Referring to FIG. 2, FIG. 2 is a schematic exploded view of a battery 2 according to some embodiments of this application. The battery 2 includes a box 5 and a battery cell (not shown in FIG. 2). The battery cell is accommodated in the box 5.

The box 5 is configured to accommodate the battery cell. The box 5 may be one of various structures. In some embodiments, the box 5 may include a first box portion 51 and a second box portion 52. The first box portion 51 and the second box portion 52 fit each other. The first box portion 51 and the second box portion 52 together define an accommodation space 53 configured to accommodate the battery cell. The second box portion 52 may be a hollow structure that is opened at one end. The first box portion 51 is a plate-like structure. The first box portion 51 fits on the opening side of the second box portion 52 to form the box 5 provided with the accommodation space 53. The first box portion 51 and the second box portion 52 each may be a hollow structure opened at one side. The opening side of the first box portion 51 fits on the opening side of the second box portion 52, so as to form the box 5 with the accommodation space 53. Definitely, the first box portion 51 and the second box portion 52 may be in various shapes, such as a cylinder or a cuboid.

To improve airtightness between the first box portion 51 and the second box portion 52 that are connected, a sealing element such as a sealant or a sealing ring may be disposed between the first box portion 51 and the second box portion 52.

Assuming that the first box portion 51 fits on the top of the second box portion 52, the first box portion 51 may also be referred to as an upper box, and the second box portion 52 may also be referred to as a lower box.

There may be one or more battery cells in the battery 2. If there are a plurality of battery cells, the plurality of battery cells may be connected in series, parallel, or series-and-parallel pattern. The series-and-parallel pattern means a combination of series connection and parallel connection of the plurality of battery cells. The plurality of battery cells may be directly connected in series, parallel, or series-and-parallel pattern, and then the whole of the plurality of battery cells may be accommodated in the box 5. Alternatively, the plurality of battery cells may be connected in series, parallel, or series-and-parallel pattern to form a battery module 6, and then a plurality of battery modules 6 are connected in series, parallel, or series-and-parallel pattern to form a whole for being accommodated in the box 5.

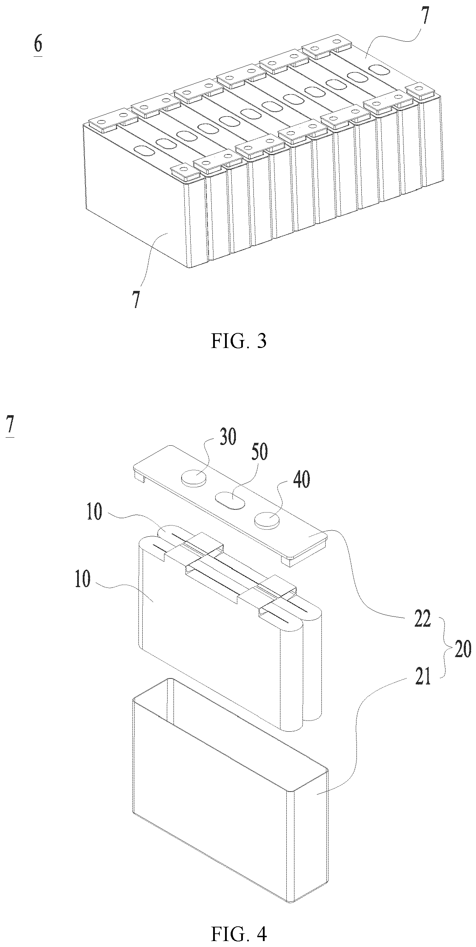

**In** some embodiments, referring to FIG. 3, FIG. 3 is a schematic structural diagram of a battery module 6 shown in FIG. 2. If there are a plurality of battery cells, the plurality of battery cells are connected in series, parallel, or series-and-parallel pattern to form a battery module 6 first. A plurality of battery modules 6 are then connected in series, parallel, or series-and-parallel pattern to form a whole for being accommodated in the box.

The plurality of battery cells 7 in the battery module 6 may be electrically connected by a busbar component, so as to implement parallel connection, series connection, or series-parallel connection between the plurality of battery cells 7 in the battery module 6.

Referring to FIG. 4, FIG. 4 is a schematic exploded view of a battery cell 7 shown in FIG. 3. The battery cell 7 according to this embodiment of this application includes an electrode assembly 10 and a shell 20. The electrode assembly 10 is accommodated in the shell 20.

In some embodiments, the shell 20 may be further configured to accommodate an electrolyte such as an electrolytic solution. The shell 20 may be one of various structures.

In some embodiments, the shell 20 may include a housing 21 and an end cap 22. The housing 21 is a hollow structure opened on one side. The end cap 22 fits on, and is hermetically connected to, the opening of the housing 21, to form a sealed space configured to accommodate the electrode assembly 10 and the electrolyte.

During assembling of the battery cell 7, the electrode assembly 10 may be put into the housing 21 first, and then the end cap 22 fits on the opening of the housing 21. Subsequently, the electrolyte is injected into the housing 21 through an electrolyte injection port on the end cap 22.

The housing 21 may be in various shapes such as a cylinder or a cuboid. The shape of the housing 21 may be determined depending on the specific shape of the electrode assembly 10. For example, if the electrode assembly 10 is a cylindrical structure, the housing may be a cylindrical housing. If the electrode assembly 10 is a cuboidal structure, the housing may be a cuboidal housing. Also, the end cap 22 may be one of various structures. For example, the end cap 22 is a plate-like structure, a hollow structure opened at one end, or the like. For example, in FIG. 4, the housing 21 is a cuboidal structure, the end cap 22 is a plate-like structure, and the end cap 22 fits on the opening on top of the housing 21.

In some embodiments, the battery cell 7 may further include a positive electrode terminal 30, a negative electrode terminal 40, and a pressure relief mechanism 50. The positive electrode terminal 30, the negative electrode terminal 40, and the pressure relief mechanism 50 are all mounted on the end cap 22. Both the positive electrode terminal 30 and the negative electrode terminal 40 are configured to electrically connect to the electrode assembly 10 to output electrical energy generated by the electrode assembly 10. The pressure relief mechanism 50 is configured to release pressure inside the battery cell 7 when an internal pressure or temperature of the battery cell 7 reaches a preset value.

For example, the pressure relief mechanism 50 is located between the positive electrode terminal 30 and the negative electrode terminal 40. The pressure relief mechanism 50 may be a component such as an explosion-proof valve, a rupture disk, a gas valve, a pressure relief valve, or a safety valve.

Definitely, in some embodiments, the shell 20 may be another structure. For example, the shell 20 includes a housing 21 and two end caps 22. The housing 21 is a hollow structure opened on two opposite sides. One end cap 22 fits on, and is hermetically connected to, one corresponding opening of the housing 21, to form a sealed space configured to accommodate the electrode assembly 10 and the electrolyte. In such a structure, the positive electrode terminal 30 and the negative electrode terminal 40 may be mounted on the same end cap 22, or may be mounted on different end caps 22. The pressure relief mechanism 50 may be mounted on one end cap 22, or the pressure relief mechanism 50 may be mounted on both end caps 22.

It needs to be noted that, in the battery cell 7, one or more electrode assemblies 10 may be accommodated in the shell 20. For example, in FIG. 4, there are two electrode assemblies 10.

Next, the specific structure of the electrode assembly 10 is described in detail with reference to drawings.

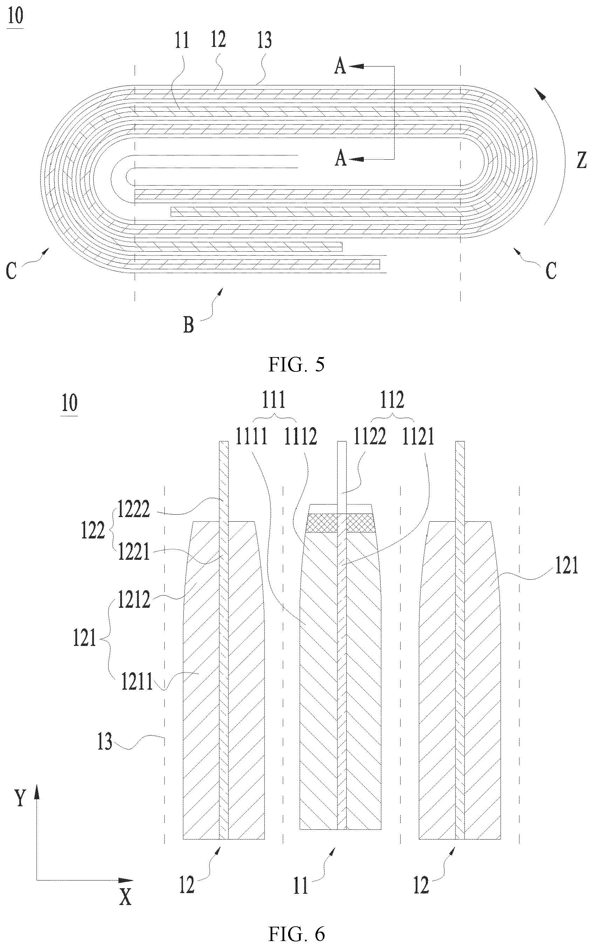

FIG. 5 is a schematic structural diagram of an electrode assembly according to an embodiment of this application; and FIG. 6 is partial schematic sectional view of the electrode assembly shown in FIG. 5 and sectioned along an A-A line.

Referring to FIG. 5 and FIG. 6, the electrode assembly 10 includes a positive electrode plate 11 and a negative electrode plate 12 that are stacked. A positive active material layer 111 of the positive electrode plate 11 is disposed opposite to a negative active material layer 121 of the negative electrode plate 12.

In some embodiments, the positive electrode plate 11 includes a positive current collector 112 and a positive active material layer 111 coated on both surfaces of the positive current collector 112. The negative electrode plate 12 includes a negative current collector 122 and a negative active material layer 121 coated on both surfaces of the negative current collector 122.

The electrode assembly 10 further includes a separator 13 configured to separate the positive electrode plate 11 from the negative electrode plate 12. The separator 13 includes a large number of micropores that run through the separator. The micropores ensure free passage of electrolyte ions, and are well permeable to lithium ions. The separator 13 may be made of a material such as PP or PE.

In some embodiments, the positive electrode plate 11 and the negative electrode plate 12 are wound around a winding axis to form a jelly-roll structure. In the jelly-roll structure, the positive electrode plate 11 and the negative electrode plate 12 are stacked along a direction perpendicular to the winding axis. That is, the stacking direction X of the positive electrode plate 11 and the negative electrode plate 12 is perpendicular to the winding axis. The positive electrode plate 11 and the negative electrode plate 12 are wound into a plurality of loops along a winding direction Z. The winding direction Z is a direction in which the positive electrode plate 11 and the negative electrode plate 12 are circumferentially wound from inside out. In FIG. 5, the winding direction Z is a counterclockwise direction.

A jelly-roll structured electrode assembly 10 includes a straight region B and bend regions C located at both ends of the straight region B. The straight region B is a region with a parallel structure in the jelly-roll structure. That is, the negative electrode plate 12, the positive electrode plate 11, and the separator 13 in the straight region B are parallel to each other approximately. In other words, surfaces of each layer of negative electrode plate 12, each layer of positive electrode plate 11, and each layer of separator 13 in the straight region B of the electrode assembly 10 are all flat faces. The bend region C is a region with a bend structure in the jelly-roll structure. That is, the negative electrode plate 12, the positive electrode plate 11, and the separator 13 in the bend region C are all bent. In other words, surfaces of each layer of negative electrode plate 12, each layer of positive electrode plate 11, and each layer of separator 13 in the bend region C of the electrode assembly 10 are all curved faces.

In some embodiments, the negative active material layer 121 includes a negative electrode body portion 1211 and a negative electrode edge portion 1212 connected to the negative electrode body portion 1211. The negative electrode edge portion 1212 is located at an end of the negative active material layer 121 along a first direction Y. The first direction Y is perpendicular to a stacking direction X of the positive electrode plate 11 and the negative electrode plate 12. A thickness of the negative electrode edge portion 1212 is less than a thickness of the negative electrode body portion 1211. The negative electrode edge portion 1212 is a thin-layer region formed at an end of the negative active material layer 121 along the first direction Y.

In a process of manufacturing a positive electrode plate 11, a positive active slurry is made first by mixing a positive active material, a binder, a conductive agent, a solvent, and the like. Subsequently, the positive active slurry is coated on a positive current collector 112. A positive active material layer 111 is formed after the positive active slurry is subjected to steps such as calendering and curing. However, due to fluidity and surface tension of the positive active slurry, a thin-layer region of a relatively small thickness is formed at the end of the positive active material layer 111 after the positive active material layer 111 is formed. In some embodiments, the positive active material layer 111 includes a positive electrode body portion 1111 and a positive electrode edge portion 1112 connected to the positive electrode body portion 1111. The positive electrode edge portion 1112 is located at an end of the positive active material layer 111 along the first direction Y. A thickness of the positive electrode edge portion 1112 is less than a thickness of the positive electrode body portion 1111. The positive electrode edge portion 1112 is a thin-layer region formed at an end of the positive active material layer 111 along the first direction Y.

In some embodiments, the positive current collector 112 includes a positive coating region 1121 and a positive tab 1122. At least a part of the positive active material layer 111 is coated on the positive coating region 1121. The positive tab 1122 is connected to the end of the positive coating region 1121 and protrudes from the positive coating region 1121. At least a part of the positive tab 1122 is not coated with the positive active material layer 111, and the positive tab is configured to electrically connect to a positive electrode terminal 30 (referring to FIG. 4). The negative current collector 122 includes a negative coating region 1221 and a negative tab 1222. At least a part of the negative active material layer 121 is coated on the negative coating region 1221. The negative tab 1222 is connected to the end of the negative coating region 1221 and protrudes from the negative coating region 1221. At least a part of the negative tab 1222 is not coated with the negative active material layer 121, and the negative tab is configured to electrically connect to a negative electrode terminal 40 (referring to FIG. 4).

In some embodiments, the positive tab 1122 is connected to the end of the positive coating region 1121 along the first direction Y. The negative tab 1222 is connected to the end of the negative coating region 1221 along the first direction Y. The first direction Y is parallel to the winding axis of the electrode assembly 10.

In some embodiments, the positive tab 1122 and the negative tab 1222 are located on the same side of the electrode assembly 10 along the first direction Y. In other embodiments, the positive tab 1122 and the negative tab 1222 may be located on two sides of the electrode assembly 10 along the first direction Y respectively.

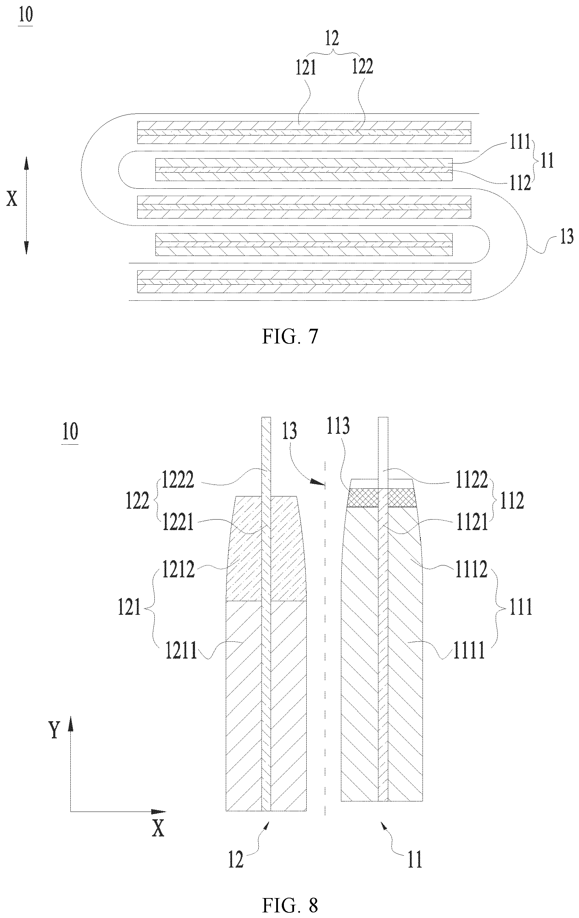

Referring to FIG. 7, FIG. 7 is a schematic structural diagram of an electrode assembly 10 according to another embodiment of this application. In some embodiments, the electrode assembly 10 includes a plurality of positive electrode plates 11 and a plurality of negative electrode plates 12. The plurality of negative electrode plates 12 and the plurality of positive electrode plates 11 are alternately stacked along the stacking direction X. The stacking direction X is parallel to the thickness direction of the positive electrode plates 11 and the thickness direction of the negative electrode plates 12. The positive electrode plates 11 and the negative electrode plates 12 are flat plate-shaped approximately.

As found by the applicant through research, during charging, the negative electrode edge portion 1212 needs to accept lithium ions deintercalated from a part that is of the positive active material layer 111 and that overlaps the negative electrode edge portion 1212. Due to a relatively small thickness of the negative electrode edge portion 1212, it is possible that the lithium ions are not completely acceptable due to an insufficient capacity, resulting in a risk of precipitating the lithium ions on the surface of the negative electrode edge portion 1212.

In view of this, the applicant makes a further improvement to the mechanism of the electrode assembly 10.

FIG. 8 to FIG. 13 are partial schematic sectional views of an electrode assembly 10 according to different embodiments of this application respectively.

Referring to FIG. 8 to FIG. 13, in some embodiments, the electrode assembly 10 includes a positive electrode plate 11 and a negative electrode plate 12 that are stacked. A positive active material layer 111 of the positive electrode plate 11 is disposed opposite to a negative active material layer 121 of the negative electrode plate 12. The negative active material layer 121 includes a negative electrode body portion 1211 and a negative electrode edge portion 1212 connected to the negative electrode body portion 1211. The negative electrode edge portion 1212 is located at an end of the negative active material layer 121 along a first direction Y. The first direction Y is perpendicular to a stacking direction X of the positive electrode plate 11 and the negative electrode plate 12. A thickness of the negative electrode edge portion 1212 is less than a thickness of the negative electrode body portion 1211. In the stacking direction X, at least a part of the negative electrode edge portion 1212 overlaps the positive active material layer 111, and the negative active material layer 121 is configured in such a way that a capacity per unit area of the negative electrode edge portion 1212 is greater than or equal to a capacity per unit area of the negative electrode body portion 1211; and/or, the positive active material layer 111 includes a positive electrode body portion 1111 and a positive electrode edge portion 1112 connected to the positive electrode body portion 1111, the positive electrode edge portion 1112 is located at an end of the positive active material layer 111 along a first direction Y, a thickness of the positive electrode edge portion 1112 is less than a thickness of the positive electrode body portion 1111. In the stacking direction X, at least a part of the positive electrode edge portion 1112 overlaps the negative electrode edge portion 1212. The positive active material layer 111 is configured in such a way that a capacity per unit area of the positive electrode edge portion 1112 is less than a capacity per unit area of the positive electrode body portion 1111.

The negative electrode body portion 1211 is not prone to lithium plating when the capacity per unit area of the negative electrode body portion 1211 meets a given requirement, where the given requirement is that the capacity per unit area of the negative electrode body portion 1211 reaches a first preset value. If the negative active material layer 121 is configured in such a way that the capacity per unit area of the negative electrode edge portion 1212 is greater than or equal to the capacity per unit area of the negative electrode body portion 1211, then the capacity per unit area of the negative electrode edge portion 1212 is greater than or equal to the first preset value. In this way, even if the thickness of the negative electrode edge portion 1212 is less than the thickness of the negative electrode body portion 1211, the negative electrode edge portion can still accept the lithium ions deintercalated from the positive active material layer 111. In this way, the negative electrode edge portion 1212 is not prone to lithium plating.

A part that is of the negative electrode body portion 1211 and that overlaps the positive electrode body portion 1111 is not prone to lithium plating when the capacity per unit area of the positive electrode body portion 1111 meets a given requirement, where the given requirement is that the capacity per unit area of the positive electrode body portion 1111 reaches a second preset value. If the positive active material layer 111 is configured in such a way that the capacity per unit area of the positive electrode edge portion 1112 is less than the capacity per unit area of the positive electrode body portion 1111, then the capacity per unit area of the positive electrode edge portion 1112 is less than the second preset value. This is equivalent to decreasing the capacity per unit area of the positive electrode edge portion 1112. In this way, even if the thickness of the negative electrode edge portion 1212 is less than the thickness of the negative electrode body portion 1211, the negative electrode edge portion 1212 can still accept the lithium ions deintercalated from a part that is of the positive electrode edge portion 1112 and that overlaps the negative electrode edge portion 1212. Therefore, the negative electrode edge portion 1212 is not prone to lithium plating.

In this embodiment of this application, both sides of the negative current collector 122 are coated with negative active material layers 121. A negative active material layer 121 referred to herein means a negative active material layer 121 on a single side. The capacity per unit area of the negative active material layer 121 means a capacity per unit area of the negative active material layer 121 on a single side of the negative electrode plate 12. Similarly, both sides of the positive current collector 112 are coated with positive active material layers 111. A positive active material layer 111 referred to herein means a positive active material layer 111 on a single side. The capacity per unit area of the positive active material layer 111 means a capacity per unit area of the positive active material layer 111 on a single side of the positive electrode plate 11.

In this embodiment of this application, the capacity per unit area of the negative electrode body portion 1211 is a ratio of a capacity of the active material of the negative electrode body portion 1211 to a total area of the negative electrode body portion 1211. The capacity per unit area of the negative electrode edge portion 1212 is a ratio of the capacity of the active material of the negative electrode edge portion 1212 to a total area of the negative electrode edge portion 1212.

Specifically, the capacity of the active material of the negative electrode body portion 1211 is Q1, and the area of the negative electrode body portion 1211 is S1 (that is, the area of a part that is of the negative current collector 122 and that is covered by the negative electrode body portion 1211). In this case, the capacity per unit area of the negative electrode body portion 1211 is QS1 = Q1/S1.

The capacity of the active material of the negative electrode edge portion 1212 is Q2, and the area of the negative electrode edge portion 1212 is S2 (that is, the area of a part that is of the negative current collector 122 and that is covered by the negative electrode edge portion 1212). In this case, the capacity per unit area of the negative electrode edge portion 1212 is QS2 = Q2/S2.

A cell balance (CB) value is a ratio of the capacity per unit area of the negative active material layer 121 to the capacity per unit area of the positive active material layer 111. When the CB value is greater than a given value, the negative active material layer 121 can accept the lithium ions deintercalated from the positive active material layer 111, so that the negative active material layer 121 is not prone to lithium plating.

The CB value of the negative electrode body portion 1211 is equal to a ratio of the capacity QS1 per unit area of the negative electrode body portion 1211 to the capacity per unit area of a part that is of the positive active material layer 111 and that overlaps the negative electrode body portion 1211. The CB value of the negative electrode edge portion 1212 is equal to a ratio of the capacity QS2 per unit area of the negative electrode edge portion 1212 to the capacity per unit area of a part that is of the positive active material layer 111 and that overlaps the negative electrode edge portion 1212. The negative electrode edge portion 1212 is not prone to lithium plating if the CB value of the negative electrode edge portion 1212 is greater than or equal to the CB value of the negative electrode body portion 1211 when the CB value of the negative electrode body portion 1211 meets a requirement.

Therefore, the capacity QS2 per unit area of the negative electrode edge portion 1212 is greater than or equal to the capacity QS1 per unit area of the negative electrode body portion 1211, so that the CB value of the negative electrode edge portion 1212 is greater than or equal to the CB value of the negative electrode body portion 1211. In this way, the negative electrode edge portion 1212 is not prone to lithium plating.

Similarly, the capacity per unit area of the positive electrode body portion 1111 is a ratio of a capacity of the active material of the positive electrode body portion 1111 to an area of the positive electrode body portion 1111. The capacity per unit area of the positive electrode edge portion 1112 is a ratio of the capacity of the active material of the positive electrode edge portion 1112 to an area of the positive electrode edge portion 1112.

Specifically, the capacity of the active material of the positive electrode body portion 1111 is Q3, and the area of the positive electrode body portion 1111 is S3 (that is, the area of a part that is of the positive current collector 112 and that is covered by the positive electrode body portion 1111). In this case, the capacity per unit area of the positive electrode body portion 1111 is QS3 = Q3/S3.

The capacity of the active material of the positive electrode edge portion 1112 is Q4, and the area of the positive electrode edge portion 1112 is S4 (that is, the area of a part that is of the positive current collector 112 and that is covered by the positive electrode edge portion 1112). In this case, the capacity per unit area of the positive electrode edge portion 1112 is QS4 = Q4/S4.

Referring to FIG. 8, FIG. 8 is a partial schematic sectional view of an electrode assembly 10 according to an embodiment of this application. In some embodiments, the electrode assembly 10 includes a positive electrode plate 11 and a negative electrode plate 12 that are stacked. A positive active material layer 111 of the positive electrode plate 11 is disposed opposite to a negative active material layer 121 of the negative electrode plate 12. The negative active material layer 121 includes a negative electrode body portion 1211 and a negative electrode edge portion 1212 connected to the negative electrode body portion 1211. The negative electrode edge portion 1212 is located at an end of the negative active material layer 121 along a first direction Y. A thickness of the negative electrode edge portion 1212 is less than a thickness of the negative electrode body portion 1211. In the stacking direction X, at least a part of the negative electrode edge portion 1212 overlaps the positive active material layer 111, and the negative active material layer 121 is configured in such a way that the capacity per unit area of the negative electrode edge portion 1212 is greater than or equal to the capacity per unit area of the negative electrode body portion 1211.

In some embodiments, the positive active material layer 111 includes a positive electrode body portion 1111 and a positive electrode edge portion 1112 connected to the positive electrode body portion 1111. The positive electrode edge portion 1112 is located at an end of the positive active material layer 111 along the first direction Y. A thickness of the positive electrode edge portion 1112 is less than a thickness of the positive electrode body portion 1111.

The positive active material layer 111 may be formed by coating with a single active slurry, so as to simplify the manufacturing process of the positive electrode plate 11.

During the calendering of the negative electrode plate 12, a blank region uncoated with the negative active slurry is reserved on the negative current collector 122. During the calendering, the negative active slurry flows toward the blank region due to the fluidity and surface tension of the negative active slurry. Therefore, after the negative active material layer 121 is cured and formed, the formed negative electrode edge portion 1212 of a reduced thickness is located at an end that is of the negative active material layer 121 and that is close to the blank region. The blank region is configured to cut out a negative tab 1222 in a subsequent step. After the negative electrode plate 12 is formed, the negative electrode edge portion 1212 is located on a side that is of the negative electrode body portion 1211 and that is close to the negative tab 1222 along the first direction Y.

In a process of calendering the negative electrode plate 12, the end that is of the negative electrode edge portion 1212 and that faces back from the negative body portion 1211 squeezes the negative current collector 122 under a calendering force to form stress concentration. In some embodiments, the thickness of the negative electrode edge portion 1212 gradually decreases along a direction that faces back from the negative electrode body portion 1211 and that is parallel to the first direction Y, thereby diffusing the stress during the calendering, reducing the stress concentration, and reducing risks of breaking the negative current collector 122.

In some embodiments, the thickness of the negative electrode edge portion 1212 is smaller than the thickness of the negative electrode body portion 1211 by 1 to 50 microns.

In the first direction Y, the smaller the dimension of the negative electrode edge portion 1212, the higher requirements are imposed on the manufacturing process, and the more prone the negative electrode edge portion 1212 is to form stress concentration on the negative current collector 122. Conversely, the larger the dimension of the negative electrode edge portion 1212, the lower the volume utilization rate of the negative active material layer 121 in the battery cell. Based on comprehensive consideration of the applicant, in the first direction, the ratio of the dimension of the negative electrode edge portion 1212 to the dimension of the negative active material layer 121 is 0.01 to 0.2. In some examples, in the first direction Y, the dimension of the negative electrode edge portion 1212 is 1 to 25 microns. Optionally, in the first direction Y, the dimension of the negative electrode edge portion 1212 is 1 to 15 microns.

During the calendering of the positive electrode plate 11, a blank region uncoated with the positive active slurry is reserved on the positive current collector 112. During the calendering, the positive active slurry flows toward the blank region due to the fluidity and surface tension of the positive active slurry. Therefore, after the positive active material layer 111 is cured and formed, the formed positive electrode edge portion 1112 of a reduced thickness is located at an end that is of the positive active material layer 111 and that is close to the blank region. The blank region is configured to cut out a positive tab 1122 in a subsequent step. After the positive electrode plate 11 is formed, the positive electrode edge portion 1112 is located on a side that is of the positive electrode body portion 1111 and that is close to the positive tab 1122 along the first direction Y.

In a process of calendering the positive electrode plate 11, the end that is of the positive electrode edge portion 1112 and that faces back from the positive body portion 1111 squeezes the positive current collector 112 under a calendering force to form stress concentration. In some embodiments, the thickness of the positive electrode edge portion 1112 gradually decreases along a direction that faces back from the positive electrode body portion 1111 and that is parallel to the first direction Y, thereby diffusing the stress during the calendering, reducing the stress concentration, and reducing risks of breaking the positive current collector 112.

In some embodiments, the thickness of the positive electrode edge portion 1112 is smaller than the thickness of the positive electrode body portion 1111 by 1 to 50 microns.

In the first direction Y, the smaller the dimension of the positive electrode edge portion 1112, the higher requirements are imposed on the manufacturing process, and the more prone the positive electrode edge portion 1112 is to form stress concentration on the positive current collector 112. Conversely, the larger the dimension of the positive electrode edge portion 1112, the lower the volume utilization rate of the positive active material layer 111 in the battery cell. Based on comprehensive consideration of the applicant, in the first direction Y, the ratio of the dimension of the positive electrode edge portion 1112 to the dimension of the positive active material layer 111 is set to 0.01 to 0.2. In some examples, in the first direction Y, the dimension of the positive electrode edge portion 1112 is 1 to 25 microns. Optionally, in the first direction Y, the dimension of the positive electrode edge portion 1112 is 1 to 15 microns.

In some embodiments, the positive tab 1122 and the negative tab 1222 are located on the same side of the electrode assembly 10 along the first direction Y. The positive electrode edge portion 1112 and the negative electrode edge portion 1212 overlap in the stacking direction X.

In some embodiments, the positive electrode plate 11 further includes an insulation layer 113 connected to the positive electrode edge portion 1112. A part of the insulation layer 113 is coated on the positive coating region 1121. Another part of the insulation layer 113 is coated on a root position of the positive tab 1122, the root position being close to the positive coating region 1121. The insulation layer 113 can reduce burrs in a process of cutting the positive tab 1122, and can also improve insulation performance of the positive tab 1122 and reduce risks of electrical conduction between the root position of the positive tab 1122 and the negative electrode plate 12.

In this embodiment of this application, the capacity per unit area of the negative electrode edge portion 1212 may be caused to be greater than or equal to the capacity per unit area of the negative electrode body portion 1211 in various ways.

In some embodiments, a weight ratio of the active material of the negative electrode edge portion 1212 to the negative electrode edge portion 1212 is greater than a weight ratio of the active material of the negative electrode body portion 1211 to the negative electrode body portion 1211, so that the capacity per unit area of the negative electrode edge portion 1212 is greater than or equal to the capacity per unit area of the negative electrode body portion 1211. The negative electrode edge portion 1212 and the negative electrode body portion 1211 each include an active material, a binder, and a conductive agent. By increasing the active material in the negative electrode edge portion 1212, the weight ratio of the active material in the negative electrode edge portion 1212 is increased, and the capacity per unit area of the negative electrode edge portion 1212 is increased so that the capacity per unit area of the negative electrode edge portion 1212 is greater than or equal to the capacity per unit area of the negative electrode body portion 1211.

In some examples, the weight ratio of the active material in the negative electrode edge portion 1212 to the negative electrode edge portion 1212 is greater than the weight ratio of the active material in the negative electrode body portion 1211 to the negative electrode body portion 1211 by 0.5% to 20%, and optionally, by 1.5% to 12%.

Optionally, the active material in the negative electrode edge portion 1212 is the same as the active material in the negative electrode body portion 1211. Both the active material in the negative electrode edge portion 1212 and the active material in the negative electrode body portion 1211 may be graphite or a compound of silicon, or the like.

In other embodiments, a gram capacity of the active material of the negative electrode edge portion 1212 is greater than a gram capacity of the active material of the negative electrode body portion 1211. By increasing the gram capacity of the active material in the negative electrode edge portion 1212, the capacity per unit area of the negative electrode edge portion 1212 can be increased so that the capacity per unit area of the negative electrode edge portion 1212 is greater than or equal to the capacity per unit area of the negative electrode body portion 1211.

The gram capacity is a ratio of a capacitance released by the active material to the mass of the active material.

In this embodiment, the active material in the negative electrode edge portion 1212 is different from the active material in the negative electrode body portion 1211. For example, the active material in the negative electrode edge portion 1212 is a compound of silicon, and the active material in the negative electrode body portion 1211 is graphite. Optionally, the gram capacity of the active material in the negative electrode edge portion 1212 is greater than the gram capacity of the active material in the negative electrode body portion 1211 by 0.5% to 20%. For example, the gram capacity of the active material in the negative electrode edge portion 1212 is greater than the gram capacity of the active material in the negative electrode body portion 1211 by 1.5% to 12%.

Optionally, the weight ratio of the active material in the negative electrode edge portion 1212 to the negative electrode edge portion 1212 is equal to the weight ratio of the active material in the negative electrode body portion 1211 to the negative electrode body portion 1211.

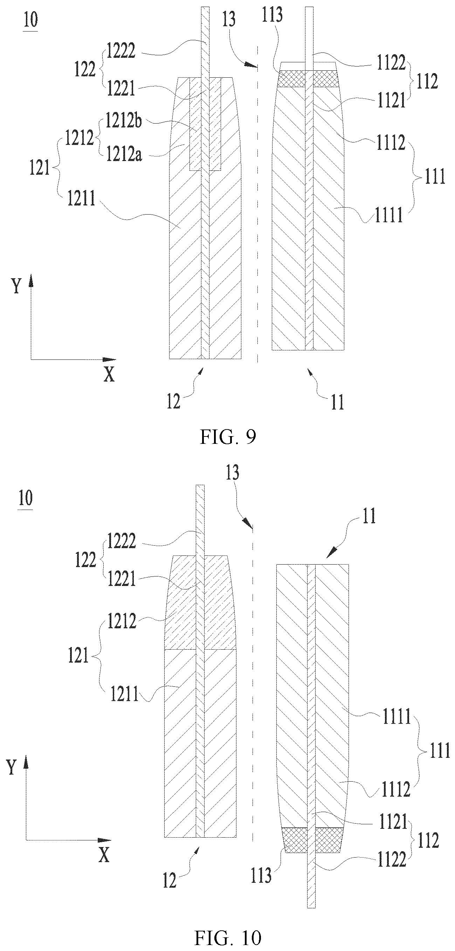

Referring to FIG. 9, FIG. 9 is a partial schematic sectional view of an electrode assembly 10 according to another embodiment of this application. The negative electrode edge portion 1212 includes a first negative coating 1212a and a second negative coating 1212b that are stacked along the stacking direction X. Optionally, the second negative coating 1212b is connected between the first negative coating 1212a and the negative current collector 122. Both the first negative coating 1212a and the second negative coating 1212b are an active coating that includes an active material. In some embodiments, the active material in the first negative coating 1212a is the same as the active material in the negative electrode body portion 1211. The weight ratio of the active material in the first negative coating 1212a to the first negative coating 1212a is equal to the weight ratio of the active material in the negative electrode body portion 1211 to the negative electrode body portion 1211. Optionally, constituents of the first negative coating 1212a are the same as constituents of the negative electrode body portion 1211. That is, the first negative coating 1212a and the negative electrode body portion 1211 may be formed from the same negative active slurry, thereby simplifying the manufacturing process of the negative electrode plate 12.

In some embodiments, a weight ratio of the active material of the second negative coating 1212b to the second negative coating 1212b is greater than the weight ratio of the active material of the first negative coating 1212a to the first negative coating 1212a. By increasing the active material in the second negative coating 1212b, the weight ratio of the active material in the second negative coating 1212b is increased, and in turn, the capacity per unit area of the negative electrode edge portion 1212 is increased so that the capacity per unit area of the negative electrode edge portion 1212 is greater than or equal to the capacity per unit area of the negative electrode body portion 1211. Optionally, the active material in the second negative coating 1212b is the same as the active material in the first negative coating 1212a. Both the active material in the second negative coating 1212b and the active material in the first negative coating 1212a may be graphite or a compound of silicon, or the like.

In other embodiments, a gram capacity of the active material of the second negative coating 1212b is greater than the gram capacity of the active material of the first negative coating 1212a. By increasing the gram capacity of the active material in the second negative coating 1212b, the capacity per unit area of the negative electrode edge portion 1212 is increased so that the capacity per unit area of the negative electrode edge portion 1212 is greater than or equal to the capacity per unit area of the negative electrode body portion 1211.

In this application, the risks of lithium plating of the negative electrode edge portion 1212 may be reduced not only by increasing the capacity per unit area of the negative electrode edge portion 1212, but also by improving kinetic performance of the negative electrode edge portion 1212. For example, the smaller the particle diameter of the active material, the easier it is for lithium ions to diffuse, and the less prone the lithium ions are to concentrate locally. In some embodiments, the particle diameter of the active material in the negative electrode edge portion 1212 is less than the particle diameter of the active material in the negative electrode body portion 1211. In this way, during charging and discharging, lithium ions are diffused more easily in the negative electrode edge portion 1212, and distributed more evenly in the negative electrode edge portion 1212, and are not prone to concentrate locally at the negative electrode edge portion 1212, thereby reducing risks of lithium plating.

Referring to FIG. 10, FIG. 10 is a partial schematic sectional view of an electrode assembly 10 according to still another embodiment of this application. The positive tab 1122 and the negative tab 1222 are located on two sides of the electrode assembly 10 along the first direction Y respectively. The negative electrode edge portion 1212 and the positive electrode body portion 1111 overlap in the stacking direction X. The positive electrode edge portion 1112 and the negative electrode body portion 1211 overlap in the stacking direction X.

When the capacity per unit area of the negative electrode body portion 1211 and the capacity per unit area of the positive electrode body portion 1111 meet a given requirement, because the capacity per unit area of the negative electrode edge portion 1212 is greater than or equal to the capacity per unit area of the negative electrode body portion 1211, even if the thickness of the negative electrode edge portion 1212 is less than the thickness of the negative electrode body portion 1211, the negative electrode edge portion can still accept the lithium ions deintercalated from the positive active material layer 111. In this way, the negative electrode edge portion 1212 is not prone to lithium plating.

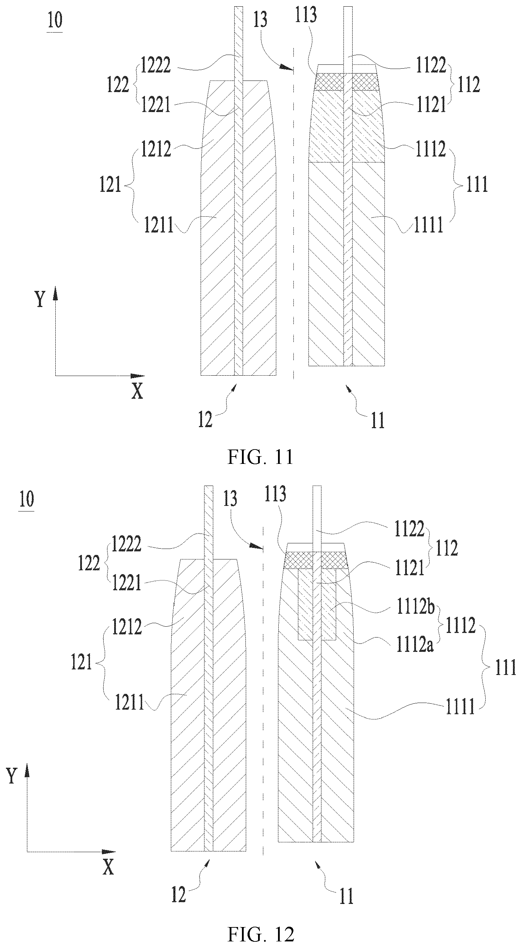

Referring to FIG. 11, FIG. 11 is a partial schematic sectional view of an electrode assembly 10 according to another embodiment of this application. The negative active material layer 121 includes a negative electrode body portion 1211 and a negative electrode edge portion 1212 connected to the negative electrode body portion 1211. The negative electrode edge portion 1212 is located at an end of the negative active material layer 121 along a first direction Y. A thickness of the negative electrode edge portion 1212 is less than a thickness of the negative electrode body portion 1211.

The positive active material layer 111 includes a positive electrode body portion 1111 and a positive electrode edge portion 1112 connected to the positive electrode body portion 1111. The positive electrode edge portion 1112 is located at an end of the positive active material layer 111 along the first direction Y. A thickness of the positive electrode edge portion 1112 is less than a thickness of the positive electrode body portion 1111. In the stacking direction X, at least a part of the positive electrode edge portion 1112 overlaps the negative electrode edge portion 1212. The positive active material layer 111 is configured in such a way that the capacity per unit area of the positive electrode edge portion 1112 is less than the capacity per unit area of the positive electrode body portion 1111.

In a case that the positive active material layer 111 includes positive electrode body portions 1111 and positive electrode edge portions 1112 of different capacities per unit area, the negative active material layer 121 may be formed by coating with a single active slurry, so as to simplify the manufacturing process of the negative electrode plate 12.

In this embodiment of this application, the capacity per unit area of the positive electrode edge portion 1112 may be caused to be less than the capacity per unit area of the positive electrode body portion 1111 in various ways. In some embodiments, with the thickness being the same, the capacity per unit area of the positive electrode edge portion 1112 is also less than the capacity per unit area of the positive electrode body portion 1111.

In some embodiments, a weight ratio of the active material of the positive electrode edge portion 1112 to the positive electrode edge portion 1112 is less than a weight ratio of the active material of the positive electrode body portion 1111 to the positive electrode body portion 1111, so that the capacity per unit area of the positive electrode edge portion 1112 is less than the capacity per unit area of the positive electrode body portion 1111. The positive electrode edge portion 1112 and the positive electrode body portion 1111 each include an active material, a binder, and a conductive agent. By decreasing the active material in the positive electrode edge portion 1112, the weight ratio of the active material in the positive electrode edge portion 1112 is decreased, and the capacity per unit area of the positive electrode edge portion 1112 is decreased so that the capacity per unit area of the positive electrode edge portion 1112 is less than the capacity per unit area of the positive electrode body portion 1111.

In this embodiment, optionally, the weight ratio of the active material in the positive electrode edge portion 1112 to the positive electrode edge portion 1112 is less than the weight ratio of the active material in the positive electrode body portion 1111 to the positive electrode body portion 1111 by 0.5% to 20%. For example, the weight ratio of the active material in the positive electrode edge portion 1112 to the positive electrode edge portion 1112 is less than the weight ratio of the active material in the positive electrode body portion 1111 to the positive electrode body portion 1111 by 1.5% to 12%.

In this embodiment, optionally, the active material in the positive electrode edge portion 1112 is the same as the active material in the positive electrode body portion 1111. The active material in the positive electrode edge portion 1112 and the active material in the positive electrode body portion 1111 may be lithium iron phosphate, lithium manganese oxide, ternary lithium, lithium cobalt oxide, or the like.

In other embodiments, a gram capacity of the active material of the positive electrode edge portion 1112 is less than a gram capacity of the active material of the positive electrode body portion 1111. By decreasing the gram capacity of the active material in the positive electrode edge portion 1112, the capacity per unit area of the positive electrode edge portion 1112 can be decreased so that the capacity per unit area of the positive electrode edge portion 1112 is less than the capacity per unit area of the positive electrode body portion 1111.

In this embodiment, the active material in the positive electrode edge portion 1112 is different from the active material in the positive electrode body portion 1111. For example, the active material in the positive electrode edge portion 1112 is lithium iron phosphate, and the active material in the positive electrode body portion 1111 is ternary lithium.

In this embodiment, optionally, the gram capacity of the active material in the positive electrode edge portion 1112 is less than the gram capacity of the active material in the positive electrode body portion 1111 by 0.5% to 20%. For example, the gram capacity of the active material in the positive electrode edge portion 1112 is less than the gram capacity of the active material in the positive electrode body portion 1111 by 1.5% to 12%.

In this embodiment, optionally, the weight ratio of the active material in the positive electrode edge portion 1112 to the positive electrode edge portion 1112 is equal to the weight ratio of the active material in the positive electrode body portion 1111 to the positive electrode body portion 1111.

Referring to FIG. 12, FIG. 12 is a partial schematic sectional view of an electrode assembly 10 according to yet another embodiment of this application. The positive electrode edge portion 1112 includes a first positive coating 1112a and a second positive coating 1112b that are stacked along the stacking direction X. Optionally, the second positive coating 1112b is connected between the first positive coating 1112a and the positive current collector 112.

In some embodiments, the active material in the first positive coating 1112a is the same as the active material in the positive electrode body portion 1111. The weight ratio of the active material in the first positive coating 1112a to the first positive coating 1112a is equal to the weight ratio of the active material in the positive electrode body portion 1111 to the positive electrode body portion 1111. Optionally, constituents of the first positive coating 1112a are the same as constituents of the positive electrode body portion 1111. That is, the first positive coating 1112a and the positive electrode body portion 1111 may be formed from the same positive active slurry, thereby simplifying the manufacturing process of the positive electrode plate 11.

The second positive coating 1112b may be a pure conductive coating. For example, the second positive coating 1112b is a pure conductive coating formed of a binder and a conductive agent. Alternatively, the second positive coating 1112b may be an active coating that includes lithium ions. For example, the second positive coating 1112b is an active coating that includes lithium ions and that is formed of a lithium-rich material, a binder, and a conductive agent. Alternatively, the second positive coating 1112b may be an inactive coating that includes lithium ions. For example, the second positive coating 1112b is an inactive coating that includes lithium ions and that is formed of a binder, a conductive agent, and lithium powder coated with lithium carbonate.

In some embodiments, the weight ratio of the active material of the second positive coating 1112b to the second positive coating 1112b is less than the weight ratio of the active material of the first positive coating 1112a to the first positive coating 1112a. By decreasing the active material in the second positive coating 1112b, the weight ratio of the active material in the second positive coating 1112b is decreased, and in turn, the capacity per unit area of the positive electrode edge portion 1112 is decreased so that the capacity per unit area of the positive electrode edge portion 1112 is less than the capacity per unit area of the positive electrode body portion 1111. Optionally, the second positive coating 1112b includes no active material. That is, the weight ratio of the active material of the second positive coating 1112b to the second positive coating 1112b is 0.

In other embodiments, a gram capacity of the active material of the second positive coating 1112b is less than a gram capacity of the active material of the first positive coating 1112a. By decreasing the gram capacity of the active material in the second positive coating 1112b, the capacity per unit area of the positive electrode edge portion 1112 is decreased so that the capacity per unit area of the positive electrode edge portion 1112 is less than the capacity per unit area of the positive electrode body portion 1111. In this application, the risks of lithium plating of the negative active material layer 121 may be reduced not only by decreasing the capacity per unit area of the positive electrode edge portion 1112, but also by improving kinetic performance of the positive electrode edge portion 1112. In some embodiments, a particle diameter of the active material of the positive electrode edge portion 1112 is greater than a particle diameter of the active material of the positive electrode body portion 1111. In this way, during charging and discharging, a diffusion speed of lithium ions in the positive electrode edge portion 1112 is low, and the speed of deintercalating the lithium ions from the positive electrode edge portion 1112 is also lower, thereby reducing risks of concentrating the lithium ions at a part that is of the negative electrode edge portion 1212 and that overlaps the positive electrode edge portion 1112. In this way, the negative active material layer 121 is not prone to lithium plating.

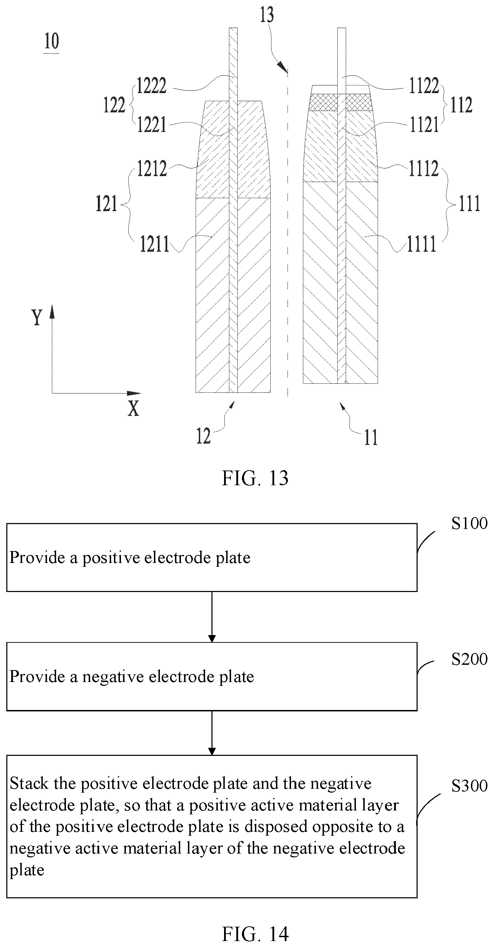

Referring to FIG. 13, FIG. 13 is a partial schematic sectional view of an electrode assembly 10 according to another embodiment of this application. The negative active material layer 121 includes a negative electrode body portion 1211 and a negative electrode edge portion 1212 connected to the negative electrode body portion 1211. The negative electrode edge portion 1212 is located at an end of the negative active material layer 121 along a first direction Y. A thickness of the negative electrode edge portion 1212 is less than a thickness of the negative electrode body portion 1211. In the stacking direction X, at least a part of the negative electrode edge portion 1212 overlaps the positive active material layer 111, and the negative active material layer 121 is configured in such a way that the capacity per unit area of the negative electrode edge portion 1212 is greater than or equal to the capacity per unit area of the negative electrode body portion 1211. The positive active material layer 111 includes a positive electrode body portion 1111 and a positive electrode edge portion 1112 connected to the positive electrode body portion 1111. The positive electrode edge portion 1112 is located at an end of the positive active material layer 111 along a first direction Y. A thickness of the positive electrode edge portion 1112 is less than a thickness of the positive electrode body portion 1111. In the stacking direction X, at least a part of the positive electrode edge portion 1112 overlaps the negative electrode edge portion 1212. The positive active material layer 111 is configured in such a way that a capacity per unit area of the positive electrode edge portion 1112 is less than a capacity per unit area of the positive electrode body portion 1111.

In this embodiment of this application, the capacity per unit area of the negative electrode edge portion 1212 can be caused to be greater than or equal to the capacity per unit area of the negative electrode body portion 1211 by increasing the weight ratio of the active material of the negative electrode edge portion 1212, or by increasing the gram capacity of the active material of the negative electrode edge portion 1212, or by other means. Similarly, the capacity per unit area of the positive electrode edge portion 1112 can be caused to be less than the capacity per unit area of the positive electrode body portion 1111 by decreasing the weight ratio of the active material of the positive electrode edge portion 1112, or by decreasing the gram capacity of the active material of the positive electrode edge portion 1112, or by other means.

When the capacity per unit area of the negative electrode body portion 1211 and the capacity per unit area of the positive electrode body portion 1111 meet a given requirement, because the capacity per unit area of the negative electrode edge portion 1212 is greater than or equal to the capacity per unit area of the negative electrode body portion 1211, and because the capacity per unit area of the positive electrode edge portion 1112 is less than the capacity per unit area of the positive electrode body portion 1111, even if the thickness of the negative electrode edge portion 1212 is less than the thickness of the negative electrode body portion 1211, the negative electrode edge portion can still accept the lithium ions deintercalated from the positive active material layer 111. In this way, the negative electrode edge portion 1212 is not prone to lithium plating.

Test steps of the capacity per unit area and the CB value are as follows:
Step 1): Test an average discharge capacity of a positive single-sided active material layer. Take a positive electrode plate in each of the foregoing embodiments, and punch the positive electrode plate with a punching die to obtain a small disc that includes a positive single-sided active material layer. Use a metallic lithium sheet as a counter electrode, use a Celgard film as a separator 13, and mix ethylene carbonate (EC), dimethyl carbonate (DMC), and diethyl carbonate (DEC) at a volume ratio of EC: DMC: DEC equal to 1: 1: 1 to form a solution in which LiPF₆ (1 mol/L) is dissolved, which serves as an electrolytic solution. Assemble 6 identical CR2430 coin batteries in an argon-protected glovebox. (1) Leave the batteries to stand for 12 hours after being assembled; (2) charge the batteries at a constant charge current of 0.1 C until the voltage reaches an upper-limit cut-off voltage x1V, and then keep the voltage x1V and charge the batteries at a constant voltage until the current reaches 50 µA; (3) leave the batteries to stand for 5 minutes; (4) finally, discharge the batteries at a constant discharge current of 0.1 C until the voltage reaches a lower-limit cut-off voltage y1 V; and (5) leave the batteries to stand for 5 minutes, repeat steps (2) to (5), and record a 2^{nd}-cycle discharge capacity. An average of the discharge capacities of the 6 coin batteries is an average discharge capacity of the positive single-sided active material layer. For example, when the positive active material is lithium iron phosphate (LFP), the upper-limit cut-off voltage x1V is 3.75 V, and the lower-limit cut-off voltage y1V is 2 V. When the positive active material is lithium nickel cobalt manganese oxide (NCM), the upper-limit cut-off voltage x1V is 4.25 V, and the lower-limit cut-off voltage y1V is 2.8 V. The area of the small disc that includes the positive single-sided active material layer is used as a unit area. The average discharge capacity of the positive single-sided active material layer is the capacity per unit area of the positive single-sided active material layer.
Step 2): Test an average charge capacity of a negative single-sided active material layer. Take a negative electrode plate in each of the foregoing embodiments, and punch the negative electrode plate with a punching die to obtain a small disc that includes a negative single-sided active material layer. The area of the small disc is the same as the area of the positive electrode small disc obtained in step 1). Use a metallic lithium sheet as a counter electrode, use a Celgard film as a separator, and mix ethylene carbonate (EC), dimethyl carbonate (DMC), and diethyl carbonate (DEC) at a volume ratio of EC: DMC: DEC equal to 1: 1: 1 to form a solution in which LiPF₆ (1 mol/L) is dissolved, which serves as an electrolytic solution. Assemble 6 CR2430 coin batteries in an argon-protected glovebox. (1) Leave the batteries to stand for 12 hours after being assembled; (2) discharge the batteries at a constant discharge current of 0.05 C until the voltage reaches a lower-limit cut-off voltage y2mV; (3) discharge the batteries at a constant discharge current of 50 µA until the voltage reaches the lower-limit cut-off voltage y2mV; (4) leave the batteries to stand for 5 minutes; (5) discharge the batteries at a constant discharge current of 10 µA until the voltage reaches the lower-limit cut-off voltage y2mV; (6) leave the batteries to stand for 5 minutes; (7) finally, charge the batteries at a constant charge current of 0.1 C until the final voltage reaches the upper-limit cut-off voltage x2V; and (8) leave the batteries to stand for 5 minutes, repeat steps (2) to (8), and record a 2^{nd}-cycle charge capacity. An average of the charge capacities of the 6 coin batteries is an average charge capacity of the negative single-sided active material layer. For example, when the negative active material is graphite, the upper-limit cut-off voltage x2V is 2 V, and the lower-limit cut-off voltage y2V is 5 mV. When the negative active material is silicon, the upper-limit cut-off voltage x2V is 2 V, and the lower-limit cut-off voltage y2V is 5 mV. The area of the small disc that includes the negative single-sided active material layer is used as a unit area. The average discharge capacity of the negative single-sided active material layer is the capacity per unit area of the negative single-sided active material layer.
Step 3): Calculate the CB value according to the following formula: CB value = average charge capacity (mAh) of the negative single-sided active material layer/average discharge capacity (mAh) of the positive single-sided active material layer.

FIG. 14 is a flowchart of a method for manufacturing an electrode assembly according to some embodiments of this application. As shown in FIG. 14, in some embodiments, a method for manufacturing an electrode assembly includes the following steps:
S 100: Provide a positive electrode plate;
S200: Provide a negative electrode plate; and
S300: Stack the positive electrode plate and the negative electrode plate, so that a positive active material layer of the positive electrode plate is disposed opposite to a negative active material layer of the negative electrode plate.

The negative active material layer includes a negative electrode body portion and a negative electrode edge portion connected to the negative electrode body portion, the negative electrode edge portion is located at an end of the negative active material layer along a first direction, the first direction is perpendicular to a stacking direction of the positive electrode plate and the negative electrode plate, and a thickness of the negative electrode edge portion is less than a thickness of the negative electrode body portion. In the stacking direction, at least a part of the negative electrode edge portion overlaps the positive active material layer, and the negative active material layer is configured in such a way that a capacity per unit area of the negative electrode edge portion is greater than or equal to a capacity per unit area of the negative electrode body portion; and/or, the positive active material layer includes a positive electrode body portion and a positive electrode edge portion connected to the positive electrode body portion, the positive electrode edge portion is located at an end of the positive active material layer along a first direction, a thickness of the positive electrode edge portion is less than a thickness of the positive electrode body portion, and, in the stacking direction, at least a part of the positive electrode edge portion overlaps the negative electrode edge portion, and the positive active material layer is configured in such a way that a capacity per unit area of the positive electrode edge portion is less than a capacity per unit area of the positive electrode body portion.

It needs to be noted that, for the related structures of the electrode assemblies manufactured according to the foregoing method for manufacturing an electrode assembly, refer to the descriptions of the electrode assemblies provided in the foregoing embodiments.

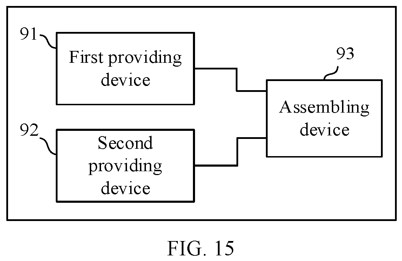

**In** assembling an electrode assembly based on the foregoing method for manufacturing an electrode assembly, it is not necessary to perform the foregoing steps in sequence. That is, the steps may be performed in the order mentioned in the embodiments, or the steps may be performed in different order than the order mentioned in the embodiments, or several steps are performed simultaneously. For example, step S100 and step S200 are not necessarily performed sequentially, but may be performed simultaneously. Referring to FIG. 15, FIG. 15 is a schematic block diagram of a system for manufacturing an electrode assembly according to some embodiments of this application. The system for manufacturing an electrode assembly includes: a first providing device 91, configured to provide a positive electrode plate; a second providing device 92, configured to provide a negative electrode plate; and an assembling device 93, configured to stack the positive electrode plate and the negative electrode plate, so that a positive active material layer of the positive electrode plate is disposed opposite to a negative active material layer of the negative electrode plate.

The negative active material layer includes a negative electrode body portion and a negative electrode edge portion connected to the negative electrode body portion, the negative electrode edge portion is located at an end of the negative active material layer along a first direction, the first direction is perpendicular to a stacking direction of the positive electrode plate and the negative electrode plate, and a thickness of the negative electrode edge portion is less than a thickness of the negative electrode body portion. In the stacking direction, at least a part of the negative electrode edge portion overlaps the positive active material layer, and the negative active material layer is configured in such a way that a capacity per unit area of the negative electrode edge portion is greater than or equal to a capacity per unit area of the negative electrode body portion; and/or, the positive active material layer includes a positive electrode body portion and a positive electrode edge portion connected to the positive electrode body portion, the positive electrode edge portion is located at an end of the positive active material layer along a first direction, a thickness of the positive electrode edge portion is less than a thickness of the positive electrode body portion, and, in the stacking direction, at least a part of the positive electrode edge portion overlaps the negative electrode edge portion, and the positive active material layer is configured in such a way that a capacity per unit area of the positive electrode edge portion is less than a capacity per unit area of the positive electrode body portion.

In some embodiments, the manufacturing system further includes a third providing device (not shown). The third providing device is configured to provide a separator that separates the positive electrode plate from the negative electrode plate. The assembling device is configured to stack the positive electrode plate, the separator, and the negative electrode plate.

For the related structures of the electrode assemblies manufactured according to the foregoing system for manufacturing an electrode assembly, refer to the descriptions of the electrode assemblies provided in the foregoing embodiments.

It needs to be noted that to the extent that no conflict occurs, the embodiments of this application and the features in the embodiments may be combined with each other. Finally, it needs to be noted that the foregoing embodiments are merely intended to describe the technical solutions of this application, but not to limit this application.

The invention is defined in the claims.

## Claims

1. An electrode assembly (10), comprising a positive electrode plate (11) and a negative electrode plate (12) that are stacked, wherein a positive active material layer (111) of the positive electrode plate (11) is disposed opposite to a negative active material layer (121) of the negative electrode plate (12), the negative active material layer (121) comprises a negative electrode body portion (1211) and a negative electrode edge portion (1212) connected to the negative electrode body portion (1211), the negative electrode edge portion (1212) is located at an end of the negative active material layer (121) along a first direction (Y), the first direction (Y) is perpendicular to a stacking direction (X) of the positive electrode plate (11) and the negative electrode plate (12), and a thickness of the negative electrode edge portion (1212) is less than a thickness of the negative electrode body portion (1211); and
in the stacking direction (X), at least a part of the negative electrode edge portion (1212) overlaps the positive active material layer (111), and the negative active material layer (121) is configured in such a way that a capacity per unit area of the negative electrode edge portion (1212) is greater than or equal to a capacity per unit area of the negative electrode body portion (1211), wherein in the first direction (Y), a ratio of a dimension of the negative electrode edge portion (1212) to a dimension of the negative active material layer (121) is 0.01 to 0.2; and
the positive active material layer (111) comprises a positive electrode body portion (1111) and a positive electrode edge portion (1112) connected to the positive electrode body portion (1111), the positive electrode edge portion (1112) is located at an end of the positive active material layer (111) along a first direction (Y), a thickness of the positive electrode edge portion (1112) is less than a thickness of the positive electrode body portion (1111), and, in the stacking direction (X), at least a part of the positive electrode edge portion (1112) overlaps the negative electrode edge portion (1212), and the positive active material layer (111) is configured in such a way that a capacity per unit area of the positive electrode edge portion (1112) is less than a capacity per unit area of the positive electrode body portion (1111), wherein in the first direction (Y), a ratio of a dimension of the positive electrode edge portion (1112) to a dimension of the positive active material layer (111) is 0.01 to 0.2.

2. The electrode assembly (10) according to claim 1, wherein
a weight ratio of an active material of the negative electrode edge portion (1212) to the negative electrode edge portion (1212) is greater than a weight ratio of the active material of the negative electrode body portion (1211) to the negative electrode body portion (1211).

3. The electrode assembly (10) according to claim 1, wherein a gram capacity of an active material of the negative electrode edge portion (1212) is greater than a gram capacity of the active material of the negative electrode body portion (1211).

4. The electrode assembly (10) according to claim 1, wherein
the negative electrode edge portion (1212) comprises a first negative coating (1212a) and a second negative coating (1212b) that are stacked along the stacking direction (X); and
a weight ratio of an active material of the second negative coating (1212b) to the second negative coating (1212b) is greater than a weight ratio of the active material of the first negative coating (1212a) to the first negative coating (1212a); or, a gram capacity of an active material of the second negative coating (1212b) is greater than a gram capacity of the active material of the first negative coating (1212a).

5. The electrode assembly (10) according to any one of claims 1 to 4, wherein a particle diameter of an active material of the negative electrode edge portion (1212) is less than a particle diameter of the active material of the negative electrode body portion (1211).

6. The electrode assembly (10) according to any one of claims 1 to 5, wherein
the negative electrode plate (12) comprises a negative current collector (122), the negative current collector (122) comprises a negative coating region (1221) and a negative tab (1222), at least a part of the negative active material layer (121) is coated on the negative coating region (1221), and the negative tab (1222) is connected to an end of the negative coating region (1221) along the first direction (Y); and
the negative electrode edge portion (1212) is located on a side that is of the negative electrode body portion (1211) and that is close to the negative tab (1222) along the first direction (Y), particularly wherein the thickness of the negative electrode edge portion (1212) gradually decreases along a direction that faces back from the negative electrode body portion (1211) and that is parallel to the first direction (Y).

7. The electrode assembly (10) according to any one of claims 1 to 6, wherein
a weight ratio of an active material of the positive electrode edge portion (1112) to the positive electrode edge portion (1112) is less than a weight ratio of the active material of the positive electrode body portion (1111) to the positive electrode body portion (1111).

8. The electrode assembly (10) according to any one of claims 1 to 6, wherein a gram capacity of an active material of the positive electrode edge portion (1112) is less than a gram capacity of the active material of the positive electrode body portion (1111).

9. The electrode assembly (10) according to any one of claims 1 to 6, wherein
the positive electrode edge portion (1112) comprises a first positive coating (1112a) and a second positive coating (1112b) that are stacked along the stacking direction (X); and
a weight ratio of an active material of the second positive coating (1112b) to the second positive coating (1112b) is less than a weight ratio of the active material of the first positive coating (1112a) to the first positive coating (1112a); or, a gram capacity of an active material of the second positive coating (1112b) is less than a gram capacity of the active material of the first positive coating (1112a).

10. The electrode assembly (10) according to any one of claims 1 to 9, wherein a particle diameter of an active material of the positive electrode edge portion (1112) is greater than a particle diameter of the active material of the positive electrode body portion (1111).

11. The electrode assembly (10) according to any one of claims 1 to 10, wherein
the positive electrode plate (11) comprises a positive current collector (112), the positive current collector (112) comprises a positive coating region (1121) and a positive tab (1122), at least a part of the positive active material layer (111) is coated on the positive coating region (1121), and the positive tab (1122) is connected to an end of the positive coating region (1121) along the first direction (Y); and
the positive electrode edge portion (1112) is located on a side that is of the positive electrode body portion (1111) and that is close to the positive tab (1122) along the first direction (Y).

12. A battery cell (7), comprising:
a shell (20); and
at least one electrode assembly (10) according to any one of claims 1 to 11, wherein the electrode assembly (10) is accommodated in the shell (20).

13. A battery (2), comprising:
a box (5); and
at least one battery cell (7) according to claim 12, wherein the battery cell (7) is accommodated in the box (5).

## Patentansprüche

1. Elektrodenanordnung (10), die eine positive Elektrodenplatte (11) und eine negative Elektrodenplatte (12) aufweist, die gestapelt sind, wobei eine positive Aktivmaterialschicht (111) der positiven Elektrodenplatte (11) gegenüber einer negativen Aktivmaterialschicht (121) der negativen Elektrodenplatte (12) angeordnet ist, die negative Aktivmaterialschicht (121) einen Negativelektroden-Körperabschnitt (1211) und einen mit dem Negativelektroden-Körperabschnitt (1211) verbundenen Negativelektroden-Randabschnitt (1212) aufweist, der Negativelektroden-Randabschnitt (1212) sich an einem Ende der negativen Aktivmaterialschicht (121) in einer ersten Richtung (Y) befindet, die erste Richtung (Y) senkrecht zu einer Stapelrichtung (X) der positiven Elektrodenplatte (11) und der negativen Elektrodenplatte (12) ist und eine Dicke des Negativelektroden-Randabschnitts (1212) geringer ist als eine Dicke des Negativelektroden-Körperabschnitts (1211); und
in der Stapelrichtung (X) zumindest ein Teil des Negativelektroden-Randabschnitts (1212) die positive Aktivmaterialschicht (111) überlappt und die negative Aktivmaterialschicht (121) derart eingerichtet ist, dass eine Kapazität pro Flächeneinheit des Negativelektroden-Randabschnitts (1212) größer als oder gleich einer Kapazität pro Flächeneinheit des Negativelektroden-Körperabschnitts (1211) ist, wobei in der ersten Richtung (Y) ein Verhältnis einer Abmessung des Negativelektroden-Randabschnitts (1212) zu einer Abmessung der negativen Aktivmaterialschicht (121) 0,01 bis 0,2 beträgt; und
die positive Aktivmaterialschicht (111) einen Positivelektroden-Körperabschnitt (1111) und einen mit dem Positivelektroden-Körperabschnitt (1111) verbundenen Positivelektroden-Randabschnitt (1112) aufweist, der Positivelektroden-Randabschnitt (1112) sich an einem Ende der positiven Aktivmaterialschicht (111) in einer ersten Richtung (Y) befindet, eine Dicke des Positivelektroden-Randabschnitts (1112) geringer ist als eine Dicke des Positivelektroden-Körperabschnitts (1111), in der Stapelrichtung (X) zumindest ein Teil des Positivelektroden-Randabschnitts (1112) den Negativelektroden-Randabschnitt (1212) überlappt und die positive Aktivmaterialschicht (111) derart eingerichtet ist, dass eine Kapazität pro Flächeneinheit des Positivelektroden-Randabschnitts (1112) geringer ist als eine Kapazität pro Flächeneinheit des Positivelektroden-Körperabschnitts (1111), wobei in der ersten Richtung (Y) ein Verhältnis einer Abmessung des Positivelektroden-Randabschnitts (1112) zu einer Abmessung der positiven Aktivmaterialschicht (111) 0,01 bis 0,2 beträgt.

2. Elektrodenanordnung (10) nach Anspruch 1, wobei
ein Gewichtsverhältnis eines Aktivmaterials des Negativelektroden-Randabschnitts (1212) zu dem Negativelektroden-Randabschnitt (1212) größer ist als ein Gewichtsverhältnis des Aktivmaterials des Negativelektroden-Körperabschnitts (1211) zu dem Negativelektroden-Körperabschnitt (1211).

3. Elektrodenanordnung (10) nach Anspruch 1, wobei eine Gramm-Kapazität eines Aktivmaterials des Negativelektroden-Randabschnitts (1212) größer ist als eine Gramm-Kapazität des Aktivmaterials des Negativelektroden-Körperabschnitts (1211).

4. Elektrodenanordnung (10) nach Anspruch 1, wobei
der Negativelektroden-Randabschnitt (1212) eine erste negative Beschichtung (1212a) und eine zweite negative Beschichtung (1212b) aufweist, die in der Stapelrichtung (X) gestapelt sind; und
ein Gewichtsverhältnis eines Aktivmaterials der zweiten negativen Beschichtung (1212b) zu der zweiten negativen Beschichtung (1212b) größer ist als ein Gewichtsverhältnis des Aktivmaterials der ersten negativen Beschichtung (1212a) zu der ersten negativen Beschichtung (1212a); oder eine Gramm-Kapazität eines Aktivmaterials der zweiten negativen Beschichtung (1212b) größer ist als eine Gramm-Kapazität des Aktivmaterials der ersten negativen Beschichtung (1212a).

5. Elektrodenanordnung (10) nach einem der Ansprüche 1 bis 4, wobei ein Partikeldurchmesser eines Aktivmaterials des Negativelektroden-Randabschnitts (1212) kleiner ist als ein Partikeldurchmesser des Aktivmaterials des Negativelektroden-Körperabschnitts (1211).

6. Elektrodenanordnung (10) nach einem der Ansprüche 1 bis 5, wobei
die negative Elektrodenplatte (12) einen negativen Stromsammler (122) aufweist, der negative Stromsammler (122) einen negativen Beschichtungsbereich (1221) und eine negative Anschlussfahne (1222) aufweist, mindestens ein Teil der negativen Aktivmaterialschicht (121) auf den negativen Beschichtungsbereich (1221) beschichtet ist und die negative Anschlussfahne (1222) mit einem Ende des negativen Beschichtungsbereichs (1221) in der ersten Richtung (Y) verbunden ist; und
der Negativelektroden-Randabschnitt (1212) sich an einer Seite befindet, die zu dem Negativelektroden-Körperabschnitt (1211) gehört und in der ersten Richtung (Y) nahe der negativen Anschlussfahne (1222) ist, insbesondere wobei die Dicke des Negativelektroden-Randabschnitts (1212) in einer Richtung, die von dem Negativelektroden-Körperabschnitt (1211) zurückweist und parallel zu der ersten Richtung (Y) ist, allmählich abnimmt.

7. Elektrodenanordnung (10) nach einem der Ansprüche 1 bis 6, wobei
ein Gewichtsverhältnis eines Aktivmaterials des Positivelektroden-Randabschnitts (1112) zu dem Positivelektroden-Randabschnitt (1112) kleiner ist als ein Gewichtsverhältnis des Aktivmaterials des Positivelektroden-Körperabschnitts (1111) zu dem Positivelektroden-Körperabschnitt (1111).

8. Elektrodenanordnung (10) nach einem der Ansprüche 1 bis 6, wobei eine Gramm-Kapazität eines Aktivmaterials des Positivelektroden-Randabschnitts (1112) geringer ist als eine Gramm-Kapazität des Aktivmaterials des Positivelektroden-Körperabschnitts (1111).

9. Elektrodenanordnung (10) nach einem der Ansprüche 1 bis 6, wobei
der Positivelektroden-Randabschnitt (1112) eine erste positive Beschichtung (1112a) und eine zweite positive Beschichtung (1112b) aufweist, die in der Stapelrichtung (X) gestapelt sind; und
ein Gewichtsverhältnis eines Aktivmaterials der zweiten positiven Beschichtung (1112b) zu der zweiten positiven Beschichtung (1112b) geringer ist als ein Gewichtsverhältnis des Aktivmaterials der ersten positiven Beschichtung (1112a) zu der ersten positiven Beschichtung (1112a); oder eine Gramm-Kapazität eines Aktivmaterials der zweiten positiven Beschichtung (1112b) geringer ist als eine Gramm-Kapazität des Aktivmaterials der ersten positiven Beschichtung (1112a).

10. Elektrodenanordnung (10) nach einem der Ansprüche 1 bis 9, wobei ein Partikeldurchmesser eines Aktivmaterials des Positivelektroden-Randabschnitts (1112) größer ist als ein Partikeldurchmesser des Aktivmaterials des Positivelektroden-Körperabschnitts (1111).

11. Elektrodenanordnung (10) nach einem der Ansprüche 1 bis 10, wobei
die positive Elektrodenplatte (11) einen positiven Stromsammler (112) aufweist, der positive Stromsammler (112) einen positiven Beschichtungsbereich (1121) und eine positive Anschlussfahne (1122) aufweist, mindestens ein Teil der positiven Aktivmaterialschicht (111) auf den positiven Beschichtungsbereich (1121) beschichtet ist und die positive Anschlussfahne (1122) mit einem Ende des positiven Beschichtungsbereichs (1121) in der ersten Richtung (Y) verbunden ist; und
der Positivelektroden-Randabschnitt (1112) sich an einer Seite befindet, die zu dem Positivelektroden-Körperabschnitt (1111) gehört und in der ersten Richtung (Y) nahe der positiven Anschlussfahne (1122) ist.

12. Batteriezelle (7), welche aufweist:
eine Schale (20); und
mindestens eine Elektrodenanordnung (10) nach einem der Ansprüche 1 bis 11, wobei die Elektrodenanordnung (10) in der Schale (20) untergebracht ist.

13. Batterie (2), welche aufweist:
einen Kasten (5); und
mindestens eine Batteriezelle (7) nach Anspruch 12, wobei die Batteriezelle (7) in dem Kasten (5) untergebracht ist.

## Revendications

1. Ensemble d'électrodes (10), comprenant une plaque d'électrode positive (11) et une plaque d'électrode négative (12) qui sont empilées, dans lequel une couche de matériau actif positif (111) de la plaque d'électrode positive (11) est disposée à l'opposé d'une couche de matériau actif négatif (121) de la plaque d'électrode négative (12), la couche de matériau actif négatif (121) comprend une partie de corps d'électrode négative (1211) et une partie de bord d'électrode négative (1212) reliée à la partie de corps d'électrode négative (1211), la partie de bord d'électrode négative (1212) est située à une extrémité de la couche de matériau actif négatif (121) le long d'une première direction (Y), la première direction (Y) est perpendiculaire à une direction d'empilement (X) de la plaque d'électrode positive (11) et de la plaque d'électrode négative (12), et une épaisseur de la partie de bord d'électrode négative (1212) est inférieure à une épaisseur de la partie de corps d'électrode négative (1211); et
dans la direction d'empilement (X), au moins une partie de la partie de bord d'électrode négative (1212) chevauche la couche de matériau actif positif (111), et la couche de matériau actif négatif (121) est configurée de telle manière qu'une capacité par unité de surface de la partie de bord d'électrode négative (1212) est supérieure ou égale à une capacité par unité de surface de la partie de corps d'électrode négative (1211), dans lequel dans la première direction (Y), un rapport d'une dimension de la partie de bord d'électrode négative (1212) à une dimension de la couche de matériau actif négatif (121) est 0,01 à 0,2; et
la couche de matériau actif positif (111) comprend une partie de corps d'électrode positive (1111) et une partie de bord d'électrode positive (1112) reliée à la partie de corps d'électrode positive (1111), la partie de bord d'électrode positive (1112) est située à une extrémité de la couche de matériau actif positif (111) le long d'une première direction (Y), une épaisseur de la partie de bord d'électrode positive (1112) est inférieure à une épaisseur de la partie de corps d'électrode positive (1111), et, dans la direction d'empilement (X), au moins une partie de la partie de bord d'électrode positive (1112) chevauche la partie de bord d'électrode négative (1212), et la couche de matériau actif positif (111) est configurée de telle sorte qu'une capacité par unité de surface de la partie de bord d'électrode positive (1112) est inférieure à une capacité par unité de surface de la partie de corps d'électrode positive (1111), dans lequel, dans la première direction (Y), un rapport d'une dimension de la partie de bord d'électrode positive (1112) à une dimension de la couche de matériau actif positif (111) est de 0,01 à 0,2.

2. Ensemble d'électrodes (10) selon la revendication 1, dans lequel
un rapport pondéral d'un matériau actif de la partie de bord d'électrode négative (1212) à la partie de bord d'électrode négative (1212) est supérieur à un rapport pondéral du matériau actif de la partie de corps d'électrode négative (1211) à la partie de corps d'électrode négative (1211).

3. Ensemble d'électrodes (10) selon la revendication 1, dans lequel une capacité en grammes d'un matériau actif de la partie de bord d'électrode négative (1212) est supérieure à une capacité en grammes du matériau actif de la partie de corps d'électrode négative (1211).

4. Ensemble d'électrodes (10) selon la revendication 1, dans lequel
la partie de bord d'électrode négative (1212) comprend un premier revêtement négatif (1212a) et un deuxième revêtement négatif (1212b) qui sont empilés le long de la direction d'empilement (X); et
un rapport pondéral d'un matériau actif du deuxième revêtement négatif (1212b) au deuxième revêtement négatif (1212b) est supérieur à un rapport pondéral du matériau actif du premier revêtement négatif (1212a) au premier revêtement négatif (1212a); ou, une capacité en grammes d'un matériau actif du deuxième revêtement négatif (1212b) est supérieure à une capacité en grammes du matériau actif du premier revêtement négatif (1212a).

5. Ensemble d'électrodes (10) selon l'une quelconque des revendications 1 à 4, dans lequel un diamètre de particule d'un matériau actif de la partie de bord d'électrode négative (1212) est inférieur à un diamètre de particule du matériau actif de la partie de corps d'électrode négative (1211).

6. Ensemble d'électrodes (10) selon l'une quelconque des revendications 1 à 5, dans lequel
la plaque d'électrode négative (12) comprend un collecteur de courant négatif (122), le collecteur de courant négatif (122) comprend une région de revêtement négatif (1221) et une languette négative (1222), au moins une partie de la couche de matériau actif négatif (121) est revêtue sur la région de revêtement négatif (1221), et la languette négative (1222) est connectée à une extrémité de la région de revêtement négatif (1221) le long de la première direction (Y); et
la partie de bord d'électrode négative (1212) est située sur un côté de la partie de corps d'électrode négative (1211) et qui est proche de la languette négative (1222) le long de la première direction (Y), en particulier dans lequel l'épaisseur de la partie de bord d'électrode négative (1212) diminue progressivement le long d'une direction qui fait face à l'arrière de la partie de corps d'électrode négative (1211) et qui est parallèle à la première direction (Y).

7. Ensemble d'électrodes (10) selon l'une quelconque des revendications 1 à 6, dans lequel
un rapport pondéral d'un matériau actif de la partie du bord d'électrode positive (1112) à la partie de bord d'électrode positive (1112) est inférieur à un rapport pondéral du matériau actif de la partie de corps d'électrode positive (1111) à la partie de corps d'électrode positive (1111).

8. Ensemble d'électrodes (10) selon l'une quelconque des revendications 1 à 6, dans lequel une capacité en grammes d'un matériau actif de la partie de bord d'électrode positive (1112) est inférieure à une capacité en grammes du matériau actif de la partie de corps d'électrode positive (1111).

9. Ensemble d'électrodes (10) selon l'une quelconque des revendications 1 à 6, dans lequel
la partie de bord d'électrode positive (1112) comprend un premier revêtement positif (1112a) et un deuxième revêtement positif (1112b) qui sont empilés le long de la direction d'empilement (X); et
un rapport pondéral d'un matériau actif du deuxième revêtement positif (1112b) au deuxième revêtement positif (1112b) est inférieur à un rapport pondéral du matériau actif du premier revêtement positif (1112a) au premier revêtement positif (1112a); ou, une capacité en grammes d'un matériau actif du deuxième revêtement positif (1112b) est inférieure à une capacité en grammes du matériau actif du premier revêtement positif (1112a).

10. Ensemble d'électrodes (10) selon l'une quelconque des revendications 1 à 9, dans lequel un diamètre de particule d'un matériau actif de la partie de bord d'électrode positive (1112) est supérieur à un diamètre de particule du matériau actif de la partie de corps d'électrode positive (1111).

11. Ensemble d'électrodes (10) selon l'une quelconque des revendications 1 à 10, dans lequel
la plaque d'électrode positive (11) comprend un collecteur de courant positif (112), le collecteur de courant positif (112) comprend une région de revêtement positif (1121) et une languette positive (1122), au moins une partie de la couche de matériau actif positif (111) est revêtue sur la région de revêtement positif (1121), et la languette positive (1122) est connectée à une extrémité de la région de revêtement positif (1121) le long de la première direction (Y); et
la partie de bord de l'électrode positive (1112) est située sur un côté de la partie de corps d'électrode positive (1111) et qui est proche de la languette positive (1122) le long de la première direction (Y).

12. Cellule de batterie (7), comprenant:
une coque (20); et
au moins un ensemble d'électrodes (10) selon l'une quelconque des revendications 1 à 11, dans lequel l'ensemble d'électrodes (10) est logé dans la coque (20).

13. Une batterie (2), comprenant:
un boîtier (5); et
au moins une cellule de batterie (7) selon la revendication 12, dans laquelle la cellule de batterie (7) est logée dans le boîtier (5).
